# EUROPEAN PATENT APPLICATION

(11) **EP 4 597 263 A1**
(43) Date of publication of application: **06.08.2025**
(21) Application number: 23871538.7
(22) Date of filing: 16.08.2023
(51) Int. Cl.: G06F 3/01, G06F 3/0481

(54) **INFORMATION PROCESSING DEVICE, INFORMATION PROCESSING METHOD, AND PROGRAM**

(30) Priority: 30.09.2022 JP 2022157719
(71) Applicant: Sony Group Corporation, Tokyo 108-0075 (JP)
(72) Inventor: ISHIKAWA, Yuri, Tokyo 108-0075 (JP); NAKAGAWA, Yusuke, Tokyo 108-0075 (JP)
(74) Representative: D Young & Co LLP
(86) International application number: PCT/JP2023/029605
(87) International publication number: WO 2024/070296

(57) **Abstract**

With the presence of a plurality of hosts taken into account, it is made easy for a user to recognize that notifications are from different hosts.

Provided is an information processing device including a control unit that converts a haptic signal corresponding to notification information transmitted by each of a plurality of hosts into a different haptic signal on the basis of a determination result based on identification of host types of the plurality of hosts.

## Description

### TECHNICAL FIELD

The present disclosure relates to an information processing device, an information processing method, and a program.

### BACKGROUND ART

In recent years, a technology to provide notifications such as haptic feedback to users has been developed. For example, Patent Document 1 discloses a technology to cause a slave device to detect a contact state between a patient and a medical device and cause a master device to feed back the contact state to an operator (user) such as a surgeon in a master-slave system. Moreover, Patent Document 1 discloses a haptic feedback device that provides easily perceivable feedback to the operator.

### CITATION LIST

### PATENT DOCUMENT

Patent Document 1: Japanese Patent Application Laid-Open No. 2021-192130

### SUMMARY OF THE INVENTION

### PROBLEMS TO BE SOLVED BY THE INVENTION

Here, the haptic feedback device that provides haptic feedback notifications to users does not account for a case where there is a plurality of processing entities responsible for outputting notification information representing notifications to the haptic feedback device.

Therefore, the present disclosure proposes a technology that accounts for a case where there is a plurality of hosts serving as processing entities and makes it easier for users to recognize notifications from different hosts.

### SOLUTIONS TO PROBLEMS

According to the present disclosure, provided is an information processing device including a control unit that converts a haptic signal corresponding to notification information transmitted by each of a plurality of hosts into a different haptic signal on the basis of a determination result based on identification of host types of the plurality of hosts.

Furthermore, according to the present disclosure, provided is an information processing method including converting a haptic signal corresponding to notification information transmitted by each of a plurality of hosts into a different haptic signal on the basis of a determination result based on identification of host types of the plurality of hosts.

Furthermore, according to the present disclosure, provided is a program for causing a computer to function as a control unit that performs a process of converting a haptic signal corresponding to notification information transmitted by each of a plurality of hosts into a different haptic signal on the basis of a determination result based on identification of host types of the plurality of hosts.

### BRIEF DESCRIPTION OF DRAWINGS

Fig. 1 is a diagram for describing an overview of an information processing system according to an embodiment of the present disclosure.
Fig. 2 is a diagram for describing examples of objects displayed on an information processing device 10 and a terminal device 20.
Fig. 3 is an explanatory diagram for describing an example of host type identification performed by a determination unit 123.
Fig. 4 is an explanatory diagram for describing an example of host type identification performed by the determination unit 123.
Fig. 5 is an explanatory diagram for describing an example of host type identification performed by the determination unit 123.
Fig. 6 is an explanatory diagram for describing an example of host type identification performed by the determination unit 123.
Fig. 7 is an explanatory diagram for describing an example of host type identification performed by the determination unit 123.
Fig. 8 is an explanatory diagram illustrating an example where a conversion unit 124 converts the frequency of a haptic signal.
Fig. 9 is an explanatory diagram illustrating an example where the conversion unit 124 converts the amplitude of the haptic signal.
Fig. 10 is an explanatory diagram illustrating an example where the conversion unit 124 converts the waveform of the haptic signal.
Fig. 11 is an explanatory diagram illustrating an example where the conversion unit 124 converts the haptic signal into a fade-out signal.
Fig. 12 is an explanatory diagram illustrating an example where the conversion unit 124 converts the amplitude of the haptic signal into 0.
Fig. 13 is an explanatory diagram illustrating an example where the conversion unit 124 converts the haptic signal into a predetermined signal.
Fig. 14 is an explanatory diagram illustrating an example where the conversion unit 124 adds a buffer time before the haptic signal.
Fig. 15 is an explanatory diagram illustrating an example where the conversion unit 124 changes the output destination of the haptic signal.
Fig. 16 is an explanatory diagram illustrating an example where the conversion unit 124 converts the frequency or amplitude of the haptic signal.
Fig. 17 is an explanatory diagram illustrating an example of frequency band conversion in a case where the conversion unit 124 converts haptic signals from a plurality of hosts into haptic signals with non-overlapping frequency bands.
Fig. 18 is an explanatory diagram illustrating an example of amplitude conversion in a case where the conversion unit 124 converts haptic signals from a plurality of hosts into haptic signals with non-overlapping amplitudes.
Fig. 19 is an explanatory diagram illustrating an example where, when the same haptic signals are output from the same host within a certain period of time, the conversion unit 124 converts the amplitudes of the second and subsequent haptic signals.
Fig. 20 is an explanatory diagram illustrating an example where the conversion unit 124 changes the output timing of the haptic signal.
Fig. 21 is a table showing correspondences between notification content indicated by haptic signals and signals transmitted from the information processing device 10 to a haptic feedback device 30 in both cases where the host type is either a main host or a sub host.
Fig. 22 is an explanatory diagram for describing an example of haptic feedback in a case where a virtual desktop screen and a virtual object displayed by the information processing device 10 are displayed on the terminal device 20.
Fig. 23 is an explanatory diagram for describing an example where haptic feedback is provided by a ring-shaped input device 30B including a pair of ring-shaped input devices.
Fig. 24 is a sequence diagram illustrating an example of an operational process flow of the information processing system according to the present embodiment.
Fig. 25 is an explanatory diagram illustrating a configuration of an information processing system and an internal configuration of a terminal device 40 according to a second embodiment of the present disclosure.
Fig. 26 is an explanatory diagram illustrating a configuration of an information processing system and an internal configuration of a haptic feedback device 30 according to a third embodiment of the present disclosure.
Fig. 27 is a sequence diagram illustrating an example of an operational process flow of the information processing system according to the third embodiment of the present disclosure.
Fig. 28 is an explanatory diagram illustrating a configuration of an information processing system and an internal configuration of a haptic feedback device 30 according to a fourth embodiment of the present disclosure.
Fig. 29 is a block diagram illustrating an example of an information processing device 90.

### MODE FOR CARRYING OUT THE INVENTION

Hereinafter, preferred embodiments of the present disclosure will be described in detail with reference to the accompanying drawings. Note that, in the present specification and drawings, components having substantially the same functional configuration are denoted by the same reference signs to avoid the description from being redundant.

Note that the description will be given in the following order.
1. Overview of information processing system according to embodiment (first embodiment) of present disclosure
2. Configuration example of information processing device 10
3. Specific example of haptic feedback
4. Example of operational process according to first embodiment
5. Second embodiment
6. Third embodiment
7. Fourth embodiment
8. Hardware configuration
9. Supplement

### <<1. Overview of information processing system according to embodiment (first embodiment) of present disclosure>>

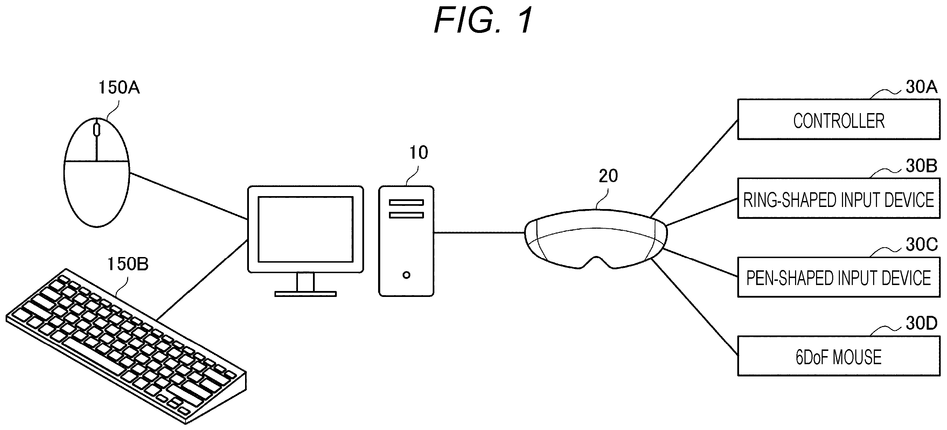

Fig. 1 is a diagram for describing an overview of an information processing system according to an embodiment of the present disclosure. As illustrated in Fig. 1, the information processing system according to the present embodiment includes an information processing device 10 (an example of an information processing device), a terminal device 20 (an example of a second information processing device), and a haptic feedback device 30.

The information processing device 10 provides information to a user in response to a user's operation. In the present embodiment, visual information is used as an example of the information provided to the user. Other examples of the information provided to the user include auditory information provided by an audio output device. Fig. 1 illustrates an example where the information processing device 10 is a personal computer (PC). In the present embodiment, a case where the information processing device 10 is a PC will be mainly described, but the information processing device 10 may be a smartphone, a tablet terminal, or the like.

As illustrated in Fig. 1, the information processing device 10 includes an operation input unit 150 that receives a user's operation. Fig. 1 illustrates a mouse 150A and a keyboard 150B as examples of a component configured to receive a user's operation. The mouse 150A and the keyboard 150B may be connected to the information processing device 10 over a wired or wireless connection. The user operates the operation input unit 150 while checking the visual information provided by the information processing device 10. The information processing device 10 is connected to the terminal device 20 and exchanges various kinds of information.

The terminal device 20 is a device that is worn on the head of the user and provides a virtual space (virtual reality: VR) to the user. The terminal device 20 includes an image display unit (an example of a display unit) for each of the left and right eyes. The terminal device 20 is further capable of displaying different images to each of the left and right eyes, and can provide a three-dimensional virtual object by displaying images with parallax to the left and right eyes.

Fig. 1 illustrates an example where the terminal device 20 is a non-transparent head mounted display (HMD) that covers the user's field of view. In the present embodiment, a case where the terminal device 20 is an HMD will be mainly described, but the terminal device 20 may be, for example, a smartphone or the like used in conjunction with augmented reality (AR) glasses or goggles.

The terminal device 20 is connected to the information processing device 10 and the haptic feedback device 30, and exchanges various kinds of information. The terminal device 20 is controlled by an application (herein, also referred to as HMD application or HMD app) executed by the information processing device 10 to run the terminal device 20. For example, the information processing device 10 executes the HMD app to control output of an image to be displayed on the terminal device 20. Furthermore, the information processing device 10 executes the HMD app to construct a virtual space to be provided by the terminal device 20.

The user can input an operation using the haptic feedback device 30 on a virtual object displayed on the terminal device 20. The haptic feedback device 30 detects an operation input by the user or a user's action through a button, a sensor, or the like, and transmits a signal indicating the operation input by the user or a signal indicating the user's action to the information processing device 10 via the terminal device 20. Furthermore, the haptic feedback device 30 may include a sensor such as an infrared (IR) light emitting element, and may allow the sensor to detect the three-dimensional coordinates of the haptic feedback device 30. The three-dimensional coordinates of the haptic feedback device 30 may be detected by a camera or the like included in the terminal device 20.

Fig. 1 illustrates an example where the terminal device 20 is connected with input devices such as a controller 30A, a ring-shaped input device 30B, a pen-shaped input device 30C, and a six degrees of freedom (6DoF) mouse 30D, which are examples of the haptic feedback device 30. In the present embodiment, an input device including a haptic feedback unit that gives haptic stimulation to the user is used as an example of the haptic feedback device 30. Note that, although Fig. 1 illustrates an example where the terminal device 20 is connected to the plurality of haptic feedback devices 30, the number of haptic feedback devices 30 connected to the terminal device 20 is not limited to a specific number, and the terminal device 20 may be connected to one haptic feedback device 30. Hereinafter, details of each input device as an example of the haptic feedback device 30 will be described.

The controller 30A is an input device to be held by a user's hand. The controller 30A may have a plurality of buttons that can be pressed by the user. The user can perform a selection operation, a confirmation operation, a scroll operation, or the like on the virtual object displayed on the terminal device 20 by pressing a corresponding button of the controller 30A. Furthermore, the controller 30A may include a touch sensor and a motion sensor. Note that the controller 30A is not limited to being held by a user's hand, and may be worn on a part of the body such as an elbow, an arm, a knee, or an ankle.

The ring-shaped input device 30B is a ring-shaped input device to be worn on a user's finger. For example, the ring-shaped input device 30B is worn on a user's index finger. The ring-shaped input device 30B may include a touch sensor and a motion sensor. The user can perform an operation on the virtual object displayed on the terminal device 20 through a tap operation or a swipe operation on the touch sensor or by moving the user's finger on which the ring-shaped input device 30B is worn.

Furthermore, the ring-shaped input device 30B may be a device including a pair of ring-shaped input devices that can be worn on user's fingers of both hands. In this case, each of the pair of ring-shaped input devices may include a touch sensor and a motion sensor. Furthermore, each of the pair of ring-shaped input devices may communicate with the terminal device 20, or one of the pair of ring-shaped input devices may communicate with the terminal device 20 and transmit the communication content to the other ring-shaped input device.

Furthermore, the ring-shaped input device 30B may be used as an auxiliary interface of the information processing device 10. For example, a cursor displayed on the information processing device 10 may be controlled through movement of the user's finger on which the ring-shaped input device 30B is worn.

The pen-shaped input device 30C is a pen-shaped input device to be held by a user's hand. The pen-shaped input device 30C may include a touch sensor and a motion sensor. The user can perform an operation on the virtual object displayed on the terminal device 20 through a tap operation or a swipe operation on the touch sensor or by moving the pen-shaped input device 30C. For example, the user may be able to write a character or draw a picture on the virtual space displayed on the terminal device 20 by moving the pen-shaped input device 30C as if writing or drawing.

Furthermore, the pen-shaped input device 30C may be used as an auxiliary interface of the information processing device 10, for example, as a pen tablet. For example, the user may be able to write a character or draw a picture on the screen displayed on the information processing device 10 by moving the pen-shaped input device 30C as if writing or drawing.

The 6DoF mouse 30D is a mouse capable of detecting six degrees of freedom, including movement along the X-axis, Y-axis, and Z-axis and rotation around the X-axis, Y-axis, and Z-axis. For example, the 6DoF mouse 30D may sense information regarding the six degrees of freedom using an inertial measurement unit (IMU). The virtual object displayed on the terminal device 20 can be operated on the basis of the sensing result from the 6DoF mouse 30D.

Furthermore, the 6DoF mouse 30D may include a plurality of buttons that can be pressed by the user. The user can perform a selection operation, a confirmation operation, a scroll operation, or the like on the virtual object displayed on the terminal device 20 by moving the 6DoF mouse 30D or pressing a corresponding button.

Furthermore, the 6DoF mouse 30D may function as a mouse for operating the screen displayed on the information processing device 10. The 6DoF mouse 30D may switch an operation target between the screen displayed on the information processing device 10 and the virtual object displayed on the terminal device 20 in response to the user's action. For example, in a case where the 6DoF mouse 30D detects planar movement of the 6DoF mouse 30D, the 6DoF mouse 30D may function as a mouse for operating the screen displayed on the information processing device 10.

Details of the example of the haptic feedback device 30 has been described. The haptic feedback device 30 provides the user with various notifications including haptic feedback through vibration on the basis of the signal transmitted from the information processing device 10. Note that vibration is an example of haptic feedback, and the haptic feedback may be provided through, for example, thermal sensation (sense of warmth, thermal stimulation), wind pressure, electrostatic force, force feedback, or the like other than vibration. The information processing device 10 generates a haptic signal corresponding to notification information indicating a notification to the user, and transmits the haptic signal to the haptic feedback device 30 via the terminal device 20.

The haptic signal may be generated by the information processing device 10, for example, as haptic feedback in response to an operation performed by the haptic feedback device 30 on the object displayed on the screen of the information processing device 10. Furthermore, the haptic signal may be generated on the HMD app as haptic feedback in response to an operation performed by the haptic feedback device 30 on the virtual object displayed on the terminal device 20.

### (Review of problems)

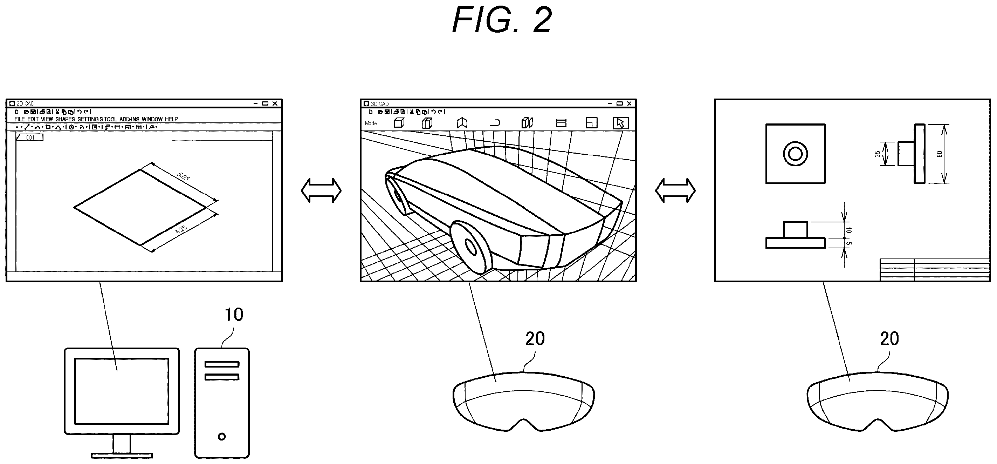

Here, the user can input an operation using the haptic feedback device 30 while checking various objects (display objects) displayed on the information processing device 10 or the terminal device 20. Fig. 2 is a diagram for describing examples of objects displayed on the information processing device 10 and the terminal device 20.

To create a computer-aided design (CAD) model, the user inputs an operation on an object displayed on the information processing device 10 or the terminal device 20. For example, the user operates a 2D CAD model displayed on the information processing device 10 as illustrated in the left diagram of Fig. 2. Furthermore, the user may operate a 3D CAD model displayed on the terminal device 20 as illustrated in the center diagram of Fig. 2. Furthermore, to create a CAD model, the user may check a 2D object such as a blueprint or a specification displayed on the terminal device 20 as illustrated in the right diagram of Fig. 2.

As described above, it is conceivable that the user frequently switches the object to be operated or checked between the object displayed on the information processing device 10 and the object displayed on the terminal device 20. Here, it is possible to use the same haptic feedback device 30 for operating or checking any object. In such a case, it is assumed that the haptic feedback device 30 receives haptic signals corresponding to notification information output by a plurality of hosts as processing entities such as the information processing device 10 or the HMD app, and provides the user with haptic feedback.

In a case where there is a plurality of hosts that are processing entities for outputting notification information, there is a possibility that the user cannot recognize the plurality of pieces of notification information provided by the haptic feedback device 30 as notifications output from different hosts. In particular, in a case where the plurality of hosts generates the same or similar haptic signals, it is difficult for the user to recognize a difference in vibration provided by the haptic feedback device 30 on the basis of the haptic signals. Therefore, there is a possibility that the user falsely recognizes notification information output from a certain host as a notification output from a different host.

Therefore, the information processing device 10 according to the present embodiment identifies a host type and controls a conversion process on a haptic signal on the basis of the host type. For example, the information processing device 10 identifies the host type, that is, whether the host is the information processing device 10 or the HMD app. Then, the information processing device 10 transmits a haptic signal with the information processing device 10 serving as a host to the haptic feedback device 30 without performing any conversion on the haptic signal. On the other hand, the information processing device 10 performs the conversion process on a haptic signal with the HMD app serving as a host, and transmits the resulting signal to the haptic feedback device 30.

The haptic feedback device 30 provides haptic feedback using the signal transmitted through the above-described process, so as to allow the user to recognize a plurality of notifications as haptic feedback from different hosts.

The overview of the information processing system according to the embodiment of the present disclosure has been described above. Next, a specific configuration of the information processing device 10 included in the information processing system according to the present embodiment will be described with reference to the drawings.

### <<2. Configuration example of information processing device 10>>

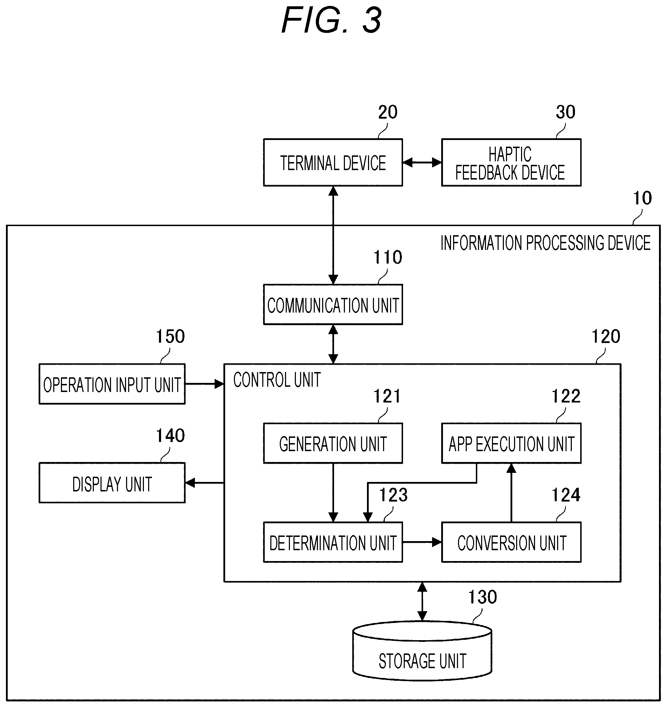

Fig. 3 is a block diagram illustrating an example of a configuration of the information processing device 10 according to the present embodiment. As illustrated in Fig. 3, the information processing device 10 includes a communication unit 110, a control unit 120, a storage unit 130, a display unit 140, and an operation input unit 150.

### (Communication unit 110)

The communication unit 110 establishes a communication connection with an external device and transmits and receives data. For example, the communication unit 110 transmits and receives data to and from the terminal device 20. The communication unit 110 can establish a communication connection with the terminal device 20 or the like over, for example, a wired or wireless local area network (LAN), Wi-Fi (registered trademark), Bluetooth (registered trademark), or the like.

For example, the communication unit 110 receives, from the haptic feedback device 30 via the terminal device 20, a signal indicating the user's action detected by the haptic feedback device 30. Furthermore, the communication unit 110 transmits, to the haptic feedback device 30 via the terminal device 20, a haptic signal generated by a generation unit 121 or an app execution unit 122 to be described later and a signal obtained by converting the haptic signal by a conversion unit 124 to be described later.

### (Control unit 120)

The control unit 120 functions as an arithmetic processing device and a control device, and controls the overall operation in the information processing device 10 in accordance with various programs. For example, the control unit 120 executes a 2D app (2D application to be executed by the information processing device 10) such as a 2D CAD tool or a browser with which the user can operate a 2D CAD model. The control unit 120 executes the 2D app to control screen display on the display unit 140. For example, the app execution unit 122 displays a UI of the 2D app on the display unit 140 to be described later. Furthermore, the control unit 120 can also display the UI of the 2D app on the terminal device 20. Furthermore, a display screen and audio generated by the 2D app may be output to the image display unit, an audio output unit, or the like included in the terminal device 20.

The control unit 120 is implemented by, for example, an electronic circuit such as a central processing unit (CPU) or a microprocessor. Furthermore, the control unit 120 may include a read only memory (ROM) that stores programs, operation parameters, and the like to be used, and a random access memory (RAM) that temporarily stores parameters and the like that change as necessary.

The control unit 120 according to the present embodiment can also function as the generation unit 121, the app execution unit 122, a determination unit 123, and the conversion unit 124.

### (Generation unit 121)

The generation unit 121 generates a haptic signal. The generation unit 121 generates the haptic signal on the basis of, for example, a signal indicating a user's action detected by the haptic feedback device 30, the signal being received by the communication unit 110. More specifically, the generation unit 121 generates the haptic signal on the basis of a signal indicating a user's action on the object displayed on the display unit 140, the signal being detected by the haptic feedback device 30. Such a haptic signal is generated to provide the user with haptic feedback. The haptic feedback provided to the user is an example of notification information.

Moreover, the generation unit 121 may perform a process for the 2D app. For example, the generation unit 121 may generate notification information regarding the 2D app such as haptic feedback in response to an operation performed by the user on the 2D app.

Furthermore, the generation unit 121 may generate the haptic signal in response to message reception from the external device via the communication unit 110 or a decrease in battery level of the information processing device 10, or the like. Such a haptic signal is generated to notify the user of the message reception, the battery level of the information processing device 10, or the like. The notification to the user is an example of notification information. Details of an example of the haptic signal generated by the generation unit 121 will be described later.

Note that the haptic signal may include a plurality of parameter values related to vibration. The plurality of parameters includes an amplitude, a frequency, an output period, or a waveform (a rectangular wave, a sine wave, or the like). Upon receipt of the haptic signal including the plurality of parameter values, the haptic feedback device 30 outputs vibrations having the plurality of parameters to provide the user with haptic feedback.

The generation unit 121 may generate the haptic signal on the basis of haptic signal patterns stored in the storage unit 130 to be described later. More specifically, the generation unit 121 may select a haptic signal pattern suitable for the signal indicating the user's action from among the haptic signal patterns stored in the storage unit 130 to generate a haptic signal indicated by the pattern. Furthermore, the haptic signal patterns may be stored in a storage unit included in the terminal device 20 or a storage unit included in the haptic feedback device 30. In this case, the communication unit 110 receives the haptic signal pattern from the terminal device 20. Then, the generation unit 121 generates the haptic signal on the basis of the haptic signal pattern received by the communication unit 110.

### (App execution unit 122)

The app execution unit 122 executes an HMD app (an HMD application executed by the information processing device 10) that provides the user with an experience in a virtual space and enables the user to edit a virtual object.

The app execution unit 122 executes, for example, the HMD app that provides the user with an experience in a virtual space and enables the user to edit a virtual object. The app execution unit 122 executes the HMD app to control output such as screen display on and audio output from the terminal device 20. Furthermore, the app execution unit 122 constructs a virtual space to be displayed on the terminal device 20. The HMD app is an application that provides the user with an experience in a virtual space by utilizing information received by the communication unit 110 from the terminal device 20 and information received by the communication unit 110 from the haptic feedback device 30 via the terminal device 20. Specifically, the HMD app may be a 3D CAD application capable of operating a 3D CAD model or the like. In a case where the HMD app is a 3D CAD application, the user can edit a 3D CAD object that is a virtual object displayed on the terminal device 20 by interacting with the 3D CAD object using the haptic feedback device 30. In a case where the terminal device 20 is an HMD capable of providing VR, a virtual space including a 3D CAD object is displayed on the terminal device 20. On the other hand, in a case where the terminal device 20 is a video see-through HMD or a see-through AR HMD capable of displaying AR, the terminal device 20 need not necessarily display a virtual space, and may display a virtual object on the image display unit such that the virtual object is positioned in the real space.

The screen display, audio output, and the like for the HMD app need not necessarily be performed by the terminal device 20, and screen display on the display unit 140 of the information processing device 10 or audio output from the audio output unit of the information processing device 10 may be performed. In this case, the virtual object need not be displayed as if the virtual object is present in the virtual space or the real space as displayed by the terminal device 20, and the virtual object may be displayed in 2D on the display unit 140 of the information processing device 10. For example, in a case where the information processing device 10 is a PC, the virtual object may be displayed in 2D that can be perceived three-dimensionally on a display that is the display unit 140. The user can edit the virtual object constructed by the HMD app on the basis of the operation of the PC by operating the virtual object displayed on the display using the operation input unit 150 to be described later such as a mouse.

Furthermore, the app execution unit 122 generates a haptic signal related to the HMD app. For example, the app execution unit 122 generates the haptic signal on the basis of a signal indicating a user's action detected by the haptic feedback device 30. More specifically, the app execution unit 122 generates the haptic signal on the basis of a signal indicating the user's action on the virtual object displayed on the terminal device 20 and detected by the haptic feedback device 30. Such a haptic signal is generated to provide the user with haptic feedback. The haptic feedback provided to the user is an example of notification information.

Furthermore, the app execution unit 122 may generate the haptic signal on the basis of a decrease in battery level of the terminal device 20 or the like. Such a haptic signal is generated to provide the user with various notifications such as message reception or the battery level of the information processing device 10. The various notifications to the user are examples of notification information. Details of an example of the haptic signal generated by the app execution unit 122 will be described later.

The app execution unit 122 may generate the haptic signal on the basis of haptic signal patterns stored in the storage unit 130 to be described later. More specifically, the app execution unit 122 may select a haptic signal pattern suitable for the signal indicating the user's action from among the haptic signal patterns stored in the storage unit 130 to generate a haptic signal indicated by the pattern. Furthermore, the haptic signal patterns may be stored in the storage unit included in the terminal device 20 or the storage unit included in the haptic feedback device 30. In this case, the communication unit 110 receives the haptic signal patterns from the terminal device 20. Then, the app execution unit 122 generates the haptic signal on the basis of the haptic signal pattern received by the communication unit 110.

### (Determination unit 123)

The determination unit 123 identifies a host that is the output source of notification information to the user to acquire a host type as a determination result. For example, the determination unit 123 may identify the host on the basis of whether the haptic signal is generated by the generation unit 121 or the haptic signal is generated by the app execution unit 122, and use the identification result as a host type determination result. More specifically, in a case where the generation unit 121 generates the haptic signal, the determination unit 123 may identify the information processing device 10 as a host. Furthermore, in a case where the haptic signal is generated by the app execution unit 122, the determination unit 123 may identify the HMD app or the HMD as a host.

Furthermore, the determination unit 123 may identify the host on the basis of whether the application that has generated the notification information is the HMD app executed by the PC or the 2D app executed by the PC. For example, in a case where the application that has generated the notification information is the HMD app, the determination unit 123 may identify the HMD app or the HMD as a host. Furthermore, in a case where the application that has generated the notification information is the 2D app executed by the PC, the determination unit 123 may identify the PC as a host.

Furthermore, the determination unit 123 may determine, as the host type, whether or not the host is primary on the basis of the host priority level. For example, the determination unit 123 may determine the priority level of each of the plurality of hosts, and identifies the host type with the highest priority level as a main host. Furthermore, the determination unit 123 may identify a host type other than the host with the highest priority level as a sub host.

Note that determination unit 123 need not determine the priority levels of all the plurality of hosts, and may determine only the host with the highest priority level, for example. In this case, the determination unit 123 identifies the host type with the highest priority level as the main host, and identifies the other host types as the sub hosts.

Furthermore, after determining the priority levels of all the plurality of hosts, the determination unit 123 may sequentially identify the host with the second highest priority level as a sub host 1 and the host with the third highest priority level as a sub host 2.

The determination unit 123 may determine the priority levels of the plurality of hosts such that the more frequently the host is used by the user, the higher the priority level assigned. Furthermore, the determination unit 123 may determine the priority levels of the plurality of hosts such that the higher the performance of the host, the higher the priority level assigned. Note that the performance may be evaluated on the basis of a value such as resolution or processing speed, but the evaluation method is not limited to any specific method.

Furthermore, the determination unit 123 may dynamically identify the host type. For example, the determination unit 123 may determine the host priority level on the basis of the execution location of the application last used by the user.

For example, in a case where the application last used by the user is executed by the app execution unit 122, the determination unit 123 may identify the HMD or the HMD app as the host with the highest priority level, that is, as the main host. That is, in a case of determining that the user is using the HMD application executed by the app execution unit 122 on the basis of a user's operation on the display of the HMD, the determination unit 123 may identify the HMD or the HMD app as the host with the highest priority level, that is, as the main host. Furthermore, in a case where the application last used by the user is executed by a unit other than the app execution unit 122, the determination unit 123 may identify the information processing device 10 as the main host.

Furthermore, in a case of determining that the user is using the 2D app on the basis of a user's operation on the display of the display unit 140, that is, in a case where the 2D app is being executed by the control unit 120, the determination unit 123 may identify the information processing device 10 as the main host.

Furthermore, in a case where the haptic feedback device 30 is not a device for operating an object displayed on the display unit 140 but a device for operating a virtual object displayed on the terminal device 20, the determination unit 123 may determine the host priority level on the basis of the device last operated by the user. For example, in a case where the device last operated by the user is the haptic feedback device 30, the determination unit 123 may identify the HMD app as the host with the highest priority level, that is, as the main host. For example, in a case where the device last operated by the user is the operation input unit 150, the determination unit 123 may identify the information processing device 10 as the host with the highest priority level, that is, as the main host.

Furthermore, in a case where the user operates the object displayed on the display unit 140 and the virtual object displayed on the terminal device 20 using the 6DoF mouse 30D, the determination unit 123 may determine the host priority level on the basis of the use state of the mouse detected by the 6DoF mouse 30D. For example, in a case where a use state indicating planar movement of the 6DoF mouse 30D is detected, the determination unit 123 may identify the information processing device 10 as the host with the highest priority level, that is, as the main host. Furthermore, in a case where a use state where the 6DoF mouse 30D uses a 6DoF function is detected, the determination unit 123 may identify the HMD app as the host with the highest priority level, that is, as the main host.

Furthermore, in a case where the user is wearing the terminal device 20, the determination unit 123 may identify the HMD app as the host with the highest priority level, that is, as the main host. Note that the terminal device 20 detects whether or not the user is wearing the terminal device 20 using a sensor, and transmits the detection result to the information processing device 10. The determination unit 123 determines the priority level on the basis of the detection result.

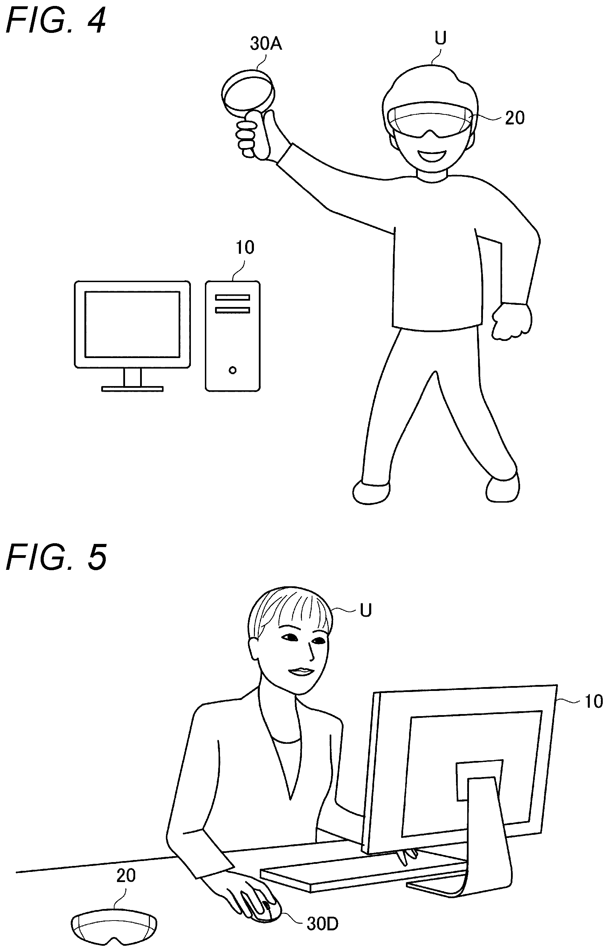

Here, examples of host type identification performed by the determination unit 123 will be described with reference to Figs. 4 to 7. Here, an example where the determination unit 123 dynamically identify the host type on the basis of the host priority level will be described. Figs. 4 to 7 are explanatory diagrams for describing the examples of host type identification performed by the determination unit 123.

In Fig. 4, a user U wears the terminal device 20 and operates, using the controller 30A, the virtual object displayed on the terminal device 20 by the HMD app. At this time, the controller 30A transmits a signal indicating a user U's action to the information processing device 10 via the terminal device 20. When the communication unit 110 of the information processing device 10 receives the signal, the app execution unit 122 generates a haptic signal as feedback on the basis of the signal.

At this time, the determination unit 123 identifies the HMD app as a host. Furthermore, since the user U is wearing the terminal device 20, the determination unit 123 may identify the HMD app as the host with the highest priority level, that is, as the main host.

On the other hand, in Fig. 5, the user U operates a screen displayed on the information processing device 10 using the 6DoF mouse 30D. At this time, the 6DoF mouse 30D transmits a signal indicating the operation input by the user U to the information processing device 10 via the terminal device 20. When the communication unit 110 receives the signal, the generation unit 121 generates a haptic signal on the basis of the signal.

At this time, the determination unit 123 identifies the information processing device 10 as a host. Furthermore, since the application last executed by the user U is executed by the control unit 120 other than the app execution unit 122, the determination unit 123 identifies the information processing device 10 as the host with the highest priority level, that is, as the main host.

Note that, even in a case where the terminal device 20 is worn on the user, when the terminal device 20 displays a screen displayed by the information processing device 10, the determination unit 123 may identify the information processing device 10 as the host with the highest priority level, that is, as the main host.

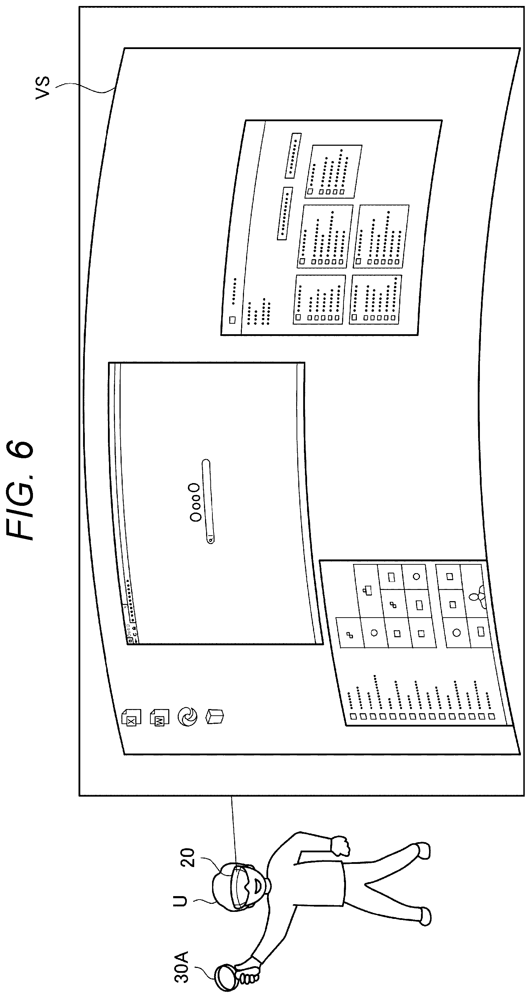

In Fig. 6, the user U operates, using the controller 30A, a virtual desktop screen VS of the information processing device 10 displayed on the terminal device 20. At this time, the determination unit 123 acquires, from the app execution unit 122, information indicating that the virtual desktop screen VS of the information processing device 10 is displayed on the terminal device 20. Then, in a case where a haptic signal as feedback on an operation performed on an object displayed on the virtual desktop screen VS is generated, the determination unit 123 identifies the information processing device 10 as a host. As described above, since the virtual desktop screen VS of the information processing device 10 is displayed on the terminal device 20, the priority level of the information processing device 10 becomes the highest, and the determination unit 123 identifies the information processing device 10 serving as the host as the main host.

Note that, when the terminal device 20 displays a virtual object together with the virtual desktop screen VS, the determination unit 123 may set the priority level of the HMD app to the highest and identifies the HMD app as the main host. For example, the determination unit 123 identifies the information processing device 10 as a host for a haptic signal indicating feedback on an operation performed by the user U on the virtual desktop screen VS. Then, the determination unit 123 identifies the host type of the host as the sub host on the basis of the priority level of the information processing device 10. Furthermore, the determination unit 123 identifies the HMD app as a host for a haptic signal indicating feedback on an operation performed by the user U on the virtual object. Then, the determination unit 123 identifies the host type of the host as the main host on the basis of the priority level of the HMD app.

Furthermore, in a case where the user lifts the image display unit of the terminal device 20 to a position that does not block the field of view of the user U (flips up the image display unit) while keeping the terminal device 20 fixed to the head, the determination unit 123 may set the priority level of the information processing device 10 to the highest and identify the information processing device 10 as the main host and the terminal device 20 as the sub host. Note that the terminal device 20 detects whether or not the user has flipped up the terminal device 20 using a sensor, and transmits the detection result to the information processing device 10. The determination unit 123 acquires the detection result received by the communication unit 110, and determines the priority level on the basis of the detection result.

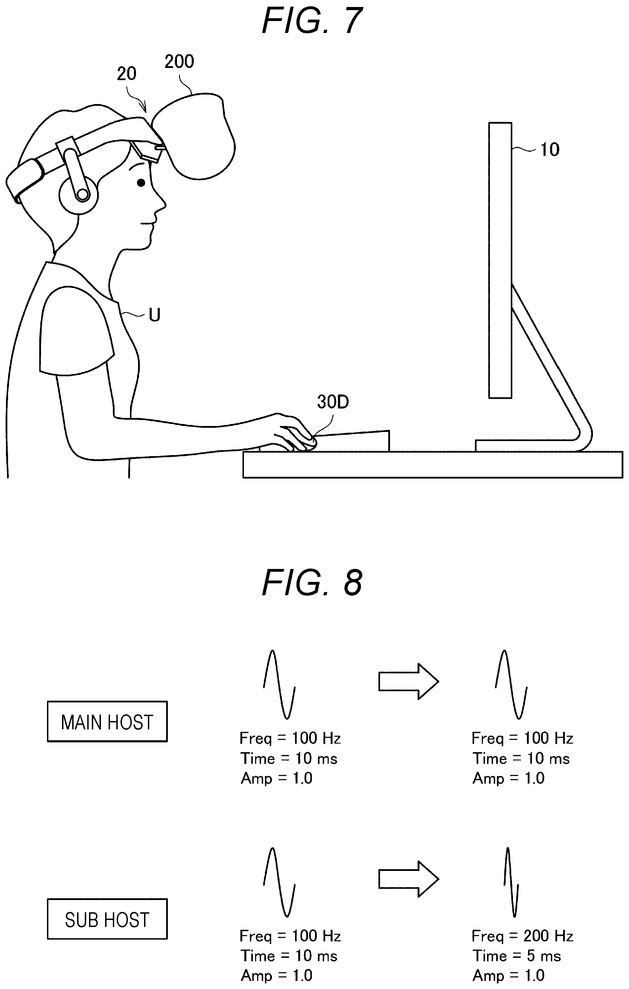

The user U illustrated in Fig. 7 flips up an image display unit 200 of the terminal device 20, views the screen displayed on the information processing device 10, and operates the screen displayed on the information processing device 10 using the 6DoF mouse 30D. For a haptic signal indicating feedback on the screen operation, the determination unit 123 identifies the information processing device 10 as a host. As described above, since the user U flips up the image display unit 200, the priority level of the information processing device 10 becomes the highest, and the determination unit 123 identifies the information processing device 10 serving as the host as the main host.

The specific example of the method for identifying the host type by the determination unit 123 has been described above. The determination unit 123 may determine whether or not the haptic feedback device 30 is in an environment where the haptic feedback device 30 can acquire notification information from a plurality of hosts on the basis of information received by the communication unit 110 from the haptic feedback device 30 via the terminal device 20. In a case where the determination unit 123 determines that the haptic feedback device 30 cannot acquire notification information from a plurality of hosts, that is, the haptic feedback device 30 is in an environment where the haptic feedback device 30 acquires notification information only from one host and provides the notification information, the determination unit 123 may identify the host type of the one host as the main host.

### (Conversion unit 124)

The conversion unit 124 controls the conversion process on the haptic signal generated by the generation unit 121 or the app execution unit 122 on the basis of the host type identified by the determination unit 123.

The conversion unit 124 may control, on the basis of the host type of each host, the conversion process on the haptic signal corresponding to each piece of notification information received from a plurality of hosts at different timings or timings that at least partially overlap in time.

As an example, the conversion unit 124 may control the conversion process on the haptic signal on the basis of the determination result from the determination unit 123 as to whether the host is the information processing device 10 or the HMD app.

As another example, the conversion unit 124 may control the conversion process on the haptic signal on the basis of the host type based on the priority level identified by the determination unit 123. In the present embodiment, an example where the conversion unit 124 controls the conversion process on the haptic signal on the basis of the host type based on the priority level identified by the determination unit 123 will be mainly described.

The conversion unit 124 can perform various types of conversion processes on the haptic signal. For example, the conversion unit 124 may convert the frequency, amplitude, output period, or waveform included in the haptic signal. Furthermore, the conversion unit 124 need not perform the conversion process on a haptic signal corresponding to notification information received from at least one of the plurality of hosts. For example, the conversion unit 124 need not convert a haptic signal output from a host whose host type is the main host. It is therefore possible for the user to recognize each of the plurality of notifications as haptic feedback from different hosts without impairing the ease of recognition of the content of the notification from a host with a higher priority level.

### - Example of conversion process

Here, an example of the conversion process performed by the conversion unit 124 will be described with reference to Figs. 8 to 20. Fig. 8 is an explanatory diagram illustrating an example where the conversion unit 124 converts the frequency of the haptic signal. Fig. 8 illustrates an example where the conversion unit 124 converts the frequency of a haptic signal output from a host whose host type is the sub host into double. Note that, when converting the frequency, the conversion unit 124 may convert the output period in addition to the frequency so as to maintain the wave number included in the haptic signal. Fig. 8 illustrates an example where the conversion unit 124 converts the output period into half.

More specifically, the conversion unit 124 converts a haptic signal having a frequency of 100 Hz, an output period of 10 ms, and an amplitude of 1.0, output from a host whose host type is the sub host, into a haptic signal having a frequency of 200 Hz, an output period of 5 ms, and an amplitude of 1.0.

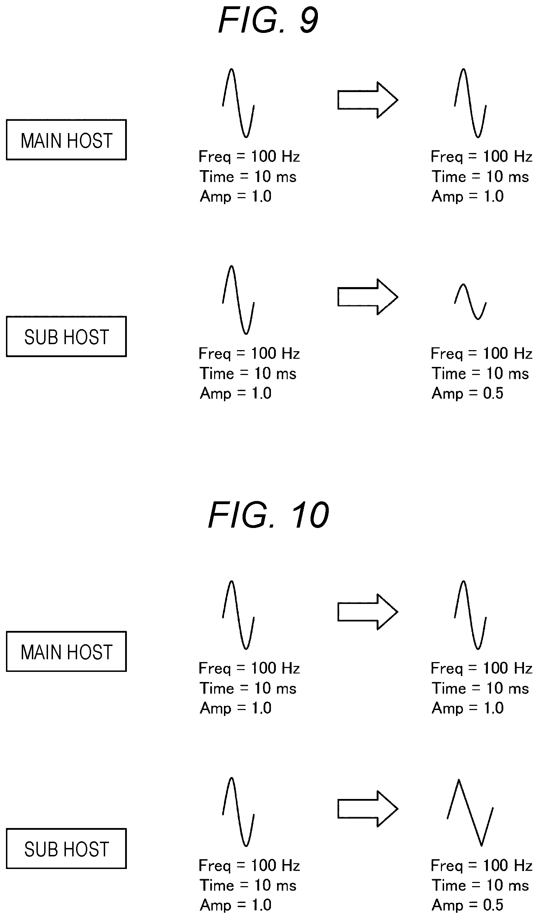

Fig. 9 is an explanatory diagram illustrating an example where the conversion unit 124 converts the amplitude of the haptic signal. Fig. 9 illustrates an example where the conversion unit 124 converts the amplitude of a haptic signal output from a host whose host type is the sub host into half. More specifically, the conversion unit 124 converts a haptic signal having a frequency of 100 Hz, an output period of 10 ms, and an amplitude of 1.0, output from a host whose host type is the sub host, into a haptic signal having a frequency of 100 Hz, an output period of 10 ms, and an amplitude of 0.5.

Fig. 10 is an explanatory diagram illustrating an example where the conversion unit 124 converts the waveform of the haptic signal. Fig. 10 illustrates an example where the conversion unit 124 converts the waveform of a haptic signal output from a host whose host type is the sub host from a sine wave into a rectangular wave. More specifically, the conversion unit 124 converts a haptic signal having a frequency of 100 Hz, an output period of 10 ms, an amplitude of 1.0, and a sine wave waveform, output from a host whose host type is the sub host, into a haptic signal having a frequency of 100 Hz, an output period of 10 ms, an amplitude of 1.0, and a rectangular wave waveform.

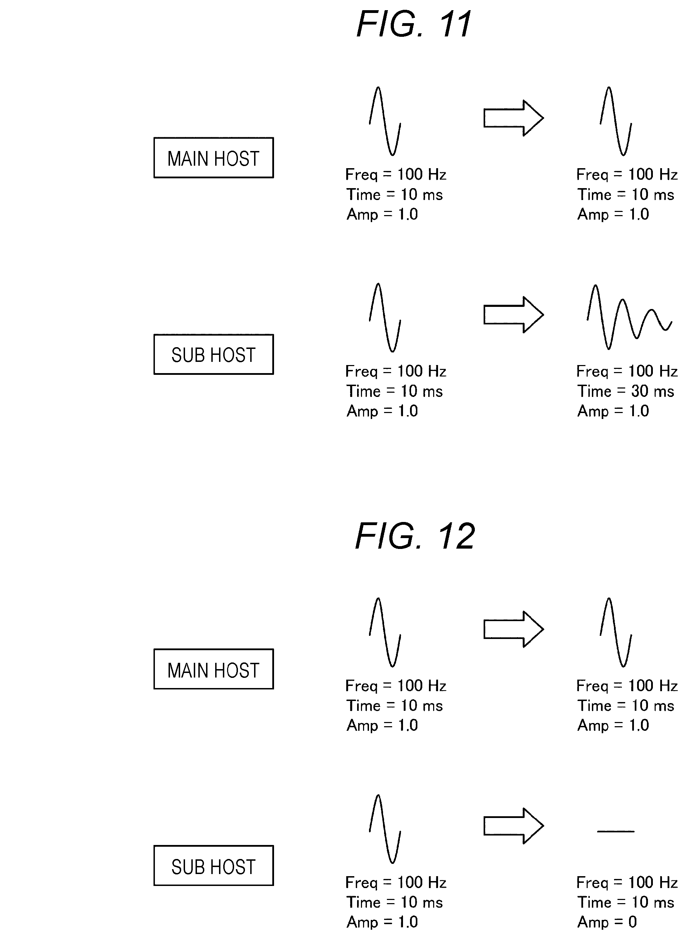

Fig. 11 is an explanatory diagram illustrating an example where the conversion unit 124 converts the haptic signal into a fade-out signal. Fig. 11 illustrates an example where the conversion unit 124 converts a haptic signal output from a host whose host type is the sub host into a fade-out signal. More specifically, the conversion unit 124 converts a haptic signal having a frequency of 100 Hz, an output period of 10 ms, and an amplitude of 1.0, output from a host whose host type is the sub host, into a fade-out signal having a frequency of 100 Hz, an output period of 30 ms, and an amplitude that gradually decreases. For example, the conversion unit 124 converts the haptic signal into a signal having an amplitude of 1.0 for an output period between 0 ms and 10 ms, an amplitude of 0.75 for an output period between 10 ms and 20 ms, and an amplitude of 0.5 for an output period between 20 ms and 30 ms.

Furthermore, the conversion unit 124 may convert the amplitude included in the haptic signal into 0. Fig. 12 is an explanatory diagram illustrating an example where the conversion unit 124 converts the amplitude included in the haptic signal into 0. Fig. 12 illustrates an example where the conversion unit 124 converts the amplitude of a haptic signal output from a host whose host type is the sub host into 0.

More specifically, the conversion unit 124 converts a haptic signal having a frequency of 100 Hz, an output period of 10 ms, and an amplitude of 1.0, output from a host whose host type is the sub host, into a haptic signal having a frequency of 100 Hz, an output period of 10 ms, and an amplitude of 0. Note that, at this time, even if the signal obtained by conversion performed by the conversion unit 124 is transmitted to the haptic feedback device 30 by the communication unit 110, the haptic feedback device 30 does not provide haptic feedback. When the conversion unit 124 performs such a conversion process, only a notification from a host having a higher priority level is provided to the user, reducing the possibility of the user falsely recognizing the output destination of the notification information indicating the notification.

In a case where the same haptic signals are output simultaneously or approximately simultaneously from a host whose host type is the main host and a host whose host type is the sub host, the conversion unit 124 may convert the amplitude of the haptic signal output from the host whose host type is the sub host into 0.

In particular, in a case where there are various types of haptic signals that a host whose host type is the main host can output, the conversion unit 124 may convert the amplitude of the haptic signal output from a host whose host type is the sub host into 0. It is therefore possible to prevent confusion between haptic feedback using the haptic signal output from the host whose host type is the main host and haptic feedback using the haptic signal output from the host whose host type is the sub host or the signal obtained by converting the haptic signal.

Furthermore, the conversion unit 124 may convert the haptic signal into a predetermined signal. In particular, when the frequency band that the haptic feedback device 30 can output is narrowband, the conversion unit 124 may convert the haptic signal into the predetermined signal.

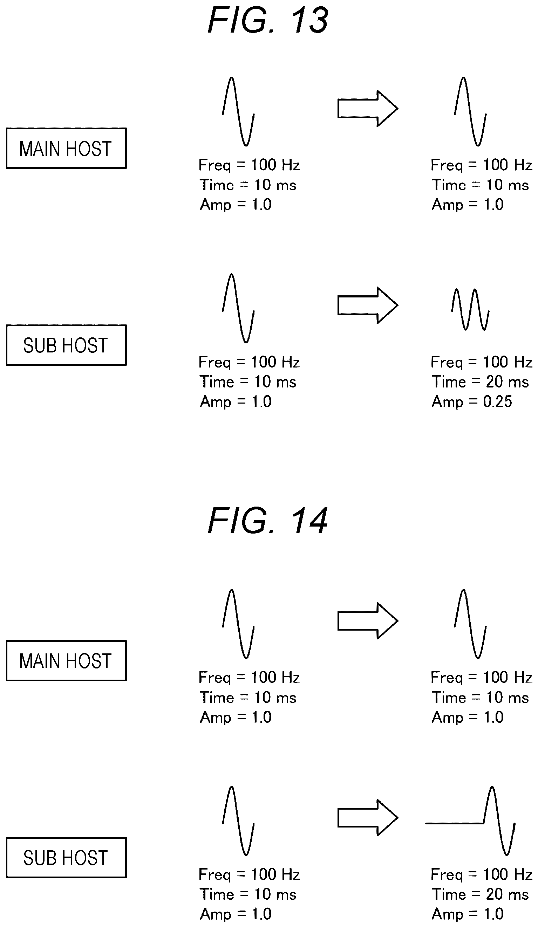

Fig. 13 is an explanatory diagram illustrating an example where the conversion unit 124 converts the haptic signal into the predetermined signal. Fig. 13 illustrates an example where the conversion unit 124 converts a haptic signal output from a host whose host type is the sub host into the predetermined signal. More specifically, the conversion unit 124 converts a haptic signal having a frequency of 100 Hz, an output period of 10 ms, and an amplitude of 1.0, output from a host whose host type is the sub host, into a haptic signal that is the predetermined signal having a frequency of 100 Hz, an output period of 20 ms, and an amplitude of 0.25.

At this time, the predetermined signal may be a signal different from each haptic signal that a host whose host type is the main host can output. Furthermore, the conversion unit 124 may perform control to display conversion of a haptic signal output from a host whose host type is the sub host into the predetermined signal on a screen to which the host serving as the main host controls output. For example, the conversion unit 124 may perform control to display "Vibration notification from a different host is provided in vibration pattern 1" on the screen.

Furthermore, the conversion unit 124 may convert the haptic signal by adding a buffer time before the haptic signal. In a case where a plurality of hosts simultaneously transmits haptic signals, the conversion unit 124 may add the buffer time before a haptic signal output from a host whose host type is the sub host to ensure that haptic feedback provided by the haptic feedback device 30 using the plurality of haptic signals does not overlap in timing.

The buffer time may be an output period of a haptic signal output from a host whose host type is the main host, or may be a time obtained by adding a certain time to the output period. When the certain time is added to the output period, the haptic feedback using the plurality of haptic signals is divided, allowing the user to easily recognize that the plurality of types of haptic feedback is distinct from each other.

Fig. 14 is an explanatory diagram illustrating an example where the conversion unit 124 adds the buffer time before the haptic signal. Fig. 14 illustrates an example where the conversion unit 124 adds the buffer time before a haptic signal output from a host whose host type is the sub host to ensure that the haptic signal output from the host whose host type is the sub host and haptic feedback do not overlap.

More specifically, the conversion unit 124 converts a haptic signal having a frequency of 100 Hz, an output period of 10 ms, and an amplitude of 1.0, output from the host whose host type is the sub host, into a haptic signal having a frequency of 100 Hz, an output period of 20 ms, an amplitude of 0 for an output period between 0 ms and 10 ms, and an amplitude of 1 for an output period between 10 ms and 20 ms.

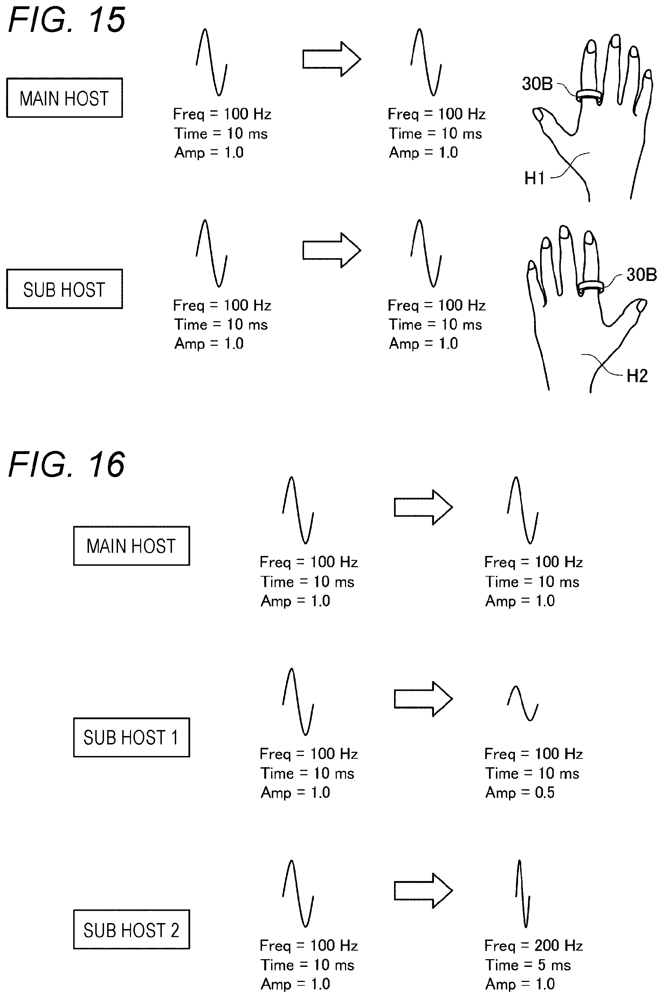

Furthermore, the conversion unit 124 may change the output destination of the haptic signal. Fig. 15 is an explanatory diagram illustrating an example where the conversion unit 124 changes the output destination of the haptic signal. Fig. 15 illustrates an example of a case where a haptic signal before conversion is output to both of the pair of ring-shaped input devices 30B. An example is illustrated where the conversion unit 124 changes the output destination of a haptic signal output from a host whose host type is the main host to a ring-shaped input device worn on the right hand of the pair of ring-shaped input devices 30B. On the other hand, the conversion unit 124 changes the output destination of ae haptic signal output from a host whose host type is the sub host to a ring-shaped input device worn on the left hand of the pair of ring-shaped input devices 30B.

Furthermore, the conversion unit 124 may perform a different conversion process based on varying combinations of the conversion processes described above on each haptic signal output from the plurality of hosts. Fig. 16 is an explanatory diagram illustrating an example where the conversion unit 124 converts the frequency or amplitude of the haptic signal. Fig. 16 illustrates an example where the conversion unit 124 converts the amplitude of a haptic signal output from a host whose host type is the sub host 1 into half and converts the frequency of a haptic signal output from a host whose host type is the sub host 2 into double.

More specifically, the conversion unit 124 converts a haptic signal having a frequency of 100 Hz, an output period of 10 ms, and an amplitude of 1.0, output from the host whose host type is the sub host 1, into a haptic signal having a frequency of 100 Hz, an output period of 10 ms, and an amplitude of 0.5.

Furthermore, the conversion unit 124 converts a haptic signal having a frequency of 100 Hz, an output period of 10 ms, and an amplitude of 1.0, output from the host whose host type is the sub host 2, into a haptic signal having a frequency of 200 Hz, an output period of 5 ms, and an amplitude of 1.0. Note that an example is illustrated here where the conversion unit 124 converts not only the frequency but also the output period, in a manner similar to the case described with reference to Fig. 8.

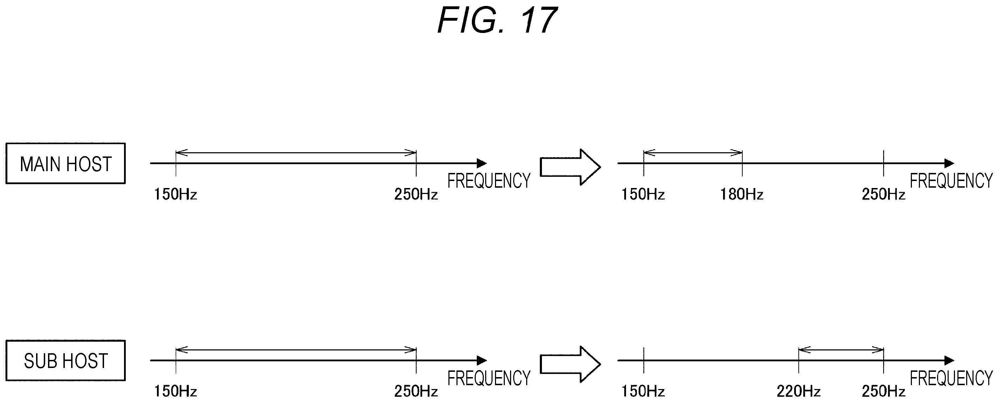

Furthermore, the conversion unit 124 may convert haptic signals from a plurality of hosts into haptic signals with non-overlapping frequency bands. Fig. 17 is an explanatory diagram illustrating an example of frequency band conversion in a case where the conversion unit 124 converts haptic signals from a plurality of hosts into haptic signals with non-overlapping frequency bands.

Fig. 17 illustrates an example where the frequency band of a haptic signal that a host whose host type is the main host can output coincides with the frequency band of a haptic signal that a host whose host type is the sub host can output, and each of the frequency bands is converted.

More specifically, the frequency band of the haptic signal that the host serving as the main host can output and the frequency band of the haptic signal that the host whose host type is the sub host can output are in a range of 150 Hz to 250 Hz. The conversion unit 124 converts the frequency of the haptic signal output from the host serving as the main host to ensure that the frequency band of the haptic signal falls within a range of 150 Hz to 180 Hz. The conversion unit 124 converts the frequency of the haptic signal output from the host serving as the sub host to ensure that the frequency band of the haptic signal falls within a range of 220 Hz to 250 Hz.

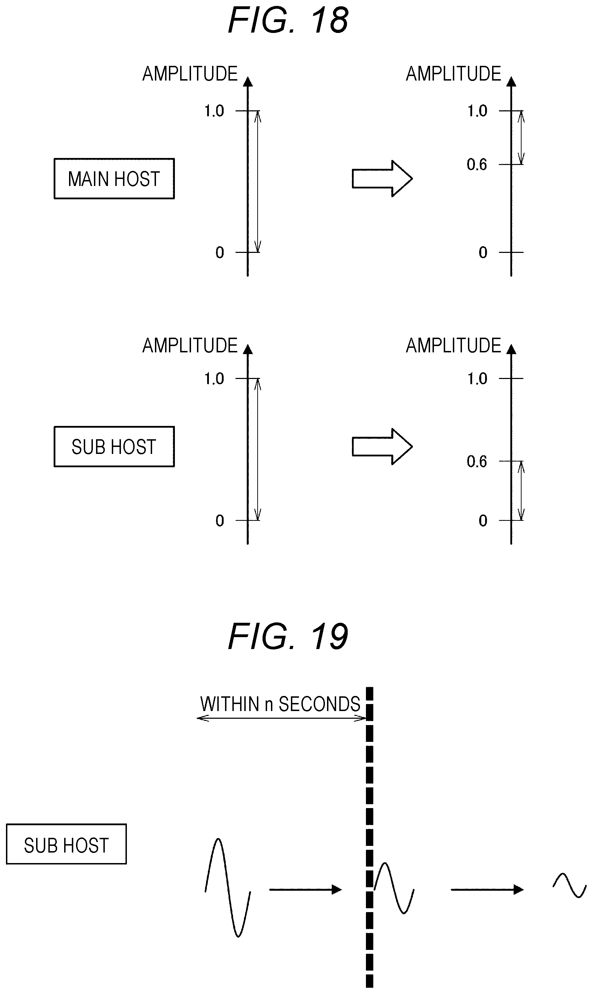

Furthermore, the conversion unit 124 may convert haptic signals from a plurality of hosts into haptic signals with non-overlapping amplitudes. Fig. 18 is an explanatory diagram illustrating an example of amplitude conversion in a case where the conversion unit 124 converts the haptic signals from the plurality of hosts into haptic signals with non-overlapping amplitudes.

Fig. 18 illustrates an example where the amplitude of a haptic signal that a host whose host type is the main host can output coincides with the amplitude of a haptic signal that a host whose host type is the sub host can output, and each of the amplitudes is converted.

More specifically, the amplitude of the haptic signal that the host whose host type is the main host can output and the amplitude of the haptic signal that the host whose host type is the sub host can output are in a range of 0 to 1.0. The conversion unit 124 converts the frequency of the haptic signal output from the host serving as the main host to ensure that the amplitude of the haptic signal falls within a range of 0.6 to 1.0. Note that the conversion unit 124 does not convert the amplitude of a haptic signal having an amplitude of 0. Furthermore, the conversion unit 124 converts the amplitude of the haptic output from the host serving as the sub host to ensure that the amplitude of the haptic output falls within a range of 0 to 0.4.

Furthermore, in a case where the same haptic signals are output from the same host within a certain period of time, the conversion unit 124 may convert the amplitudes of the second and subsequent haptic signals. For example, in a case where the same haptic signals are output from a host whose host type is the sub host within a certain period of time (for example, n seconds), the conversion unit 124 may convert the amplitudes of the haptic signals to ensure that the amplitudes of the second and subsequent haptic signals gradually decrease.

Fig. 19 is an explanatory diagram illustrating an example where, in a case where the same haptic signals are output from the same host within a certain period of time, the conversion unit 124 converts the amplitudes of the second and subsequent haptic signals. Fig. 19 illustrates an example where, in a case where the same haptic signals are output from a host whose host type is the sub host within n seconds, the amplitudes of the haptic signals are converted to ensure that the amplitudes of the second and subsequent haptic signals gradually decrease.

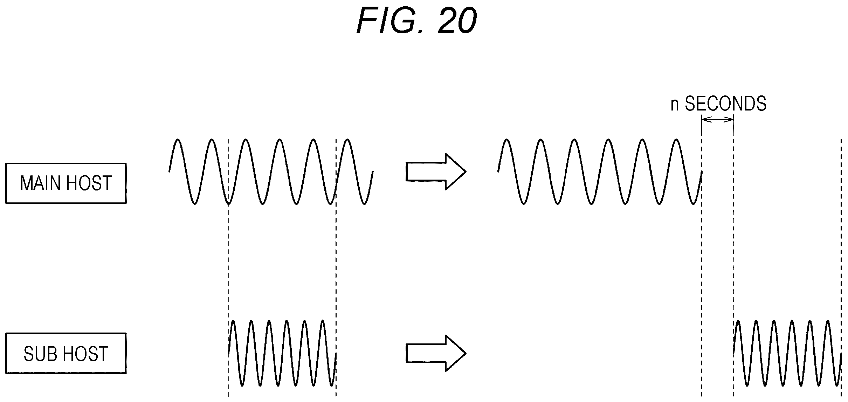

Furthermore, in a case where haptic signals from a plurality of hosts overlap, the conversion unit 124 may change the output timing of the haptic signals. Fig. 20 is an explanatory diagram illustrating an example where the conversion unit 124 changes the output timing of the haptic signals. As illustrated in Fig. 20, the conversion unit 124 may convert the output timing of a haptic signal output from a host whose host type is the sub host to ensure that the haptic signal is output n seconds after the output of a haptic signal from a host whose host type is the main host.

Although the examples of the conversion process performed by the conversion unit 124 have been described above, the conversion process performed by the conversion unit 124 is not limited to such examples. For example, the conversion unit 124 may perform a conversion process obtained by combining the conversion methods described above. Furthermore, the conversion unit 124 may perform the conversion process under a different method. For example, the conversion unit 124 may convert the haptic signal into a signal obtained by adding a predetermined signal before the haptic signal.

Furthermore, the conversion unit 124 may convert, on the basis of the pattern of a haptic signal that each of a plurality of hosts can output, a signal obtained by converting the haptic signal output from a host into a haptic signal with a pattern different from any of the patterns of the haptic signals from the other hosts. For example, the conversion unit 124 may select a conversion process method and convert a haptic signal to ensure that a signal obtained by converting the haptic signal output from a host is converted into a haptic signal with a pattern different from any of the patterns of the haptic signals from the other hosts. Note that, in this case, the storage unit 130 to be described later stores the pattern of the haptic signal that each of a plurality of hosts can output.

Furthermore, the example where the conversion unit 124 converts only the haptic signal output from a host whose host type is the sub host has been mainly described, but the conversion unit 124 may convert the haptic signal output from a host whose host type is the main host.

Furthermore, the conversion unit 124 may convert the haptic signal into a signal other than the haptic signal, such as sound or light. For example, the conversion unit 124 may convert the haptic signal output from a host whose host type is the sub host into an audio signal. The audio signal may be a signal having the same waveform as the haptic signal, or may be a predetermined audio signal.

In particular, in a case where there are various types of haptic signals that a host whose host type is the main host can output, the conversion unit 124 may convert the haptic signal output from a host whose host type is the sub host into an audio signal. It is therefore possible to prevent confusion between haptic feedback using the haptic signal output from the host whose host type is the main host and haptic feedback using the haptic signal output from the host whose host type is the sub host or a signal obtained by converting the haptic signal.

### (Storage unit 130)

The storage unit 130 is implemented by a ROM that stores programs, operation parameters, and the like to be used for processing of the control unit 120, and a RAM that temporarily stores parameters and the like that change as necessary.

### (Display unit 140)

The display unit 140 has a function of displaying various screens such as an operation screen. The display unit 140 may be implemented by, for example, a liquid crystal display (LCD) device, an organic light emitting diode (OLED) device, or the like. Furthermore, the display unit 140 may be what is called an optical see-through display having optical transparency, or may be a projector that projects an image into the real space.

### (Operation input unit 150)

The operation input unit 150 receives an operation from the user, and outputs input information to a control unit 220. The operation input unit 150 is implemented by, for example, various input devices such as a touch panel, a button, a switch, a mouse, and a keyboard.

The specific configuration of the information processing device 10 has been described above. Note that the configuration of the information processing device 10 according to the present embodiment is not limited to the example illustrated in Fig. 3. For example, the information processing device 10 may be implemented by a plurality of devices. Furthermore, at least a part of the function of the control unit 120 may be implemented by the terminal device 20 or a server (not illustrated) on the network.

### <<3. Specific example of haptic feedback>>

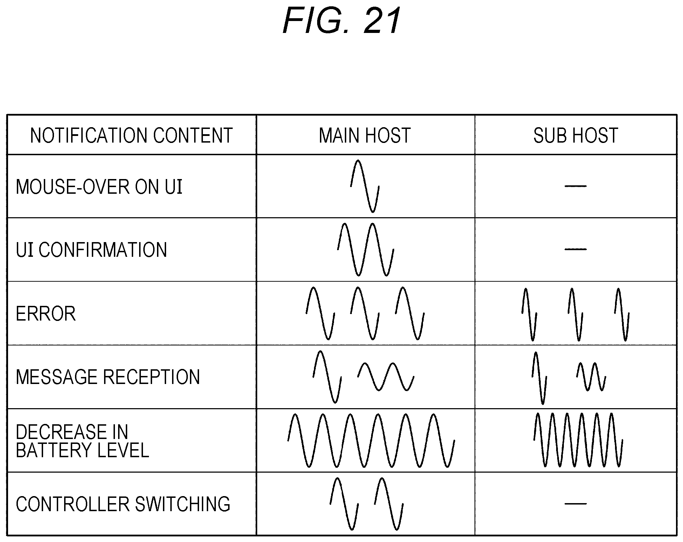

Next, a specific example of haptic feedback achieved by the information processing device 10 according to the present embodiment will be described with reference to Figs. 21 to 23.

Fig. 21 is a table showing correspondences between notification content indicated by haptic signals and signals transmitted from the information processing device 10 to the haptic feedback device 30 in cases where the host type is either the main host or the sub host.

Fig. 21 illustrates an example where the haptic signal is not converted by the conversion unit 124 in a case where the host type of the host is the main host, and the wavelength of the haptic signal is converted by the conversion unit 124 and transmitted to the haptic feedback device 30 in a case where the host type of the host is the sub host. That is, the signal in a case where the host type is the main host shown in Fig. 21 is a haptic signal generated by the generation unit 121 or the app execution unit 122. Furthermore, the signal in a case where the host type is the sub host shown in Fig. 21 is a signal obtained by conversion performed by the conversion unit 124. Note that "-" is shown for a situation where the haptic signal is output is not anticipated, but the haptic signal may be output, converted by the conversion unit 124, and transmitted to the haptic feedback device 30.

Fig. 21 shows examples of notification content indicated by the haptic signal, mouse-over on a user interface (UI) included in an object displayed on the display unit 140 or a virtual object displayed on the terminal device 20, a UI confirmation operation (click on a UI), an error indicating that the user's action is incorrect, reception of a message from the outside, a decrease in battery level, and switching of an operation target by the haptic feedback device 30 (controller).

The notification of a decrease in battery level relates to the battery level of the information processing device 10, the terminal device 20, or the haptic feedback device 30. Notification information indicating the notification of a decrease in battery level of the information processing device 10 is generated by the generation unit 121. Notification information indicating the notification of a decrease in battery level of the terminal device 20 is generated by the app execution unit 122.

Notification information indicating the notification of a decrease in battery level of the haptic feedback device 30 is generated by the generation unit 121 or the app execution unit 122. For example, in a case where an object displayed on the display unit 140 of the information processing device 10 is operated by the haptic feedback device 30, the notification information indicating the notification of a decrease in battery level of the haptic feedback device 30 may be generated by the generation unit 121. On the other hand, in a case where a virtual object displayed on the terminal device 20 is operated by the haptic feedback device 30, the notification information indicating the notification of a decrease in battery level of the haptic feedback device 30 may be generated by the app execution unit 122.

Here, an example of a case where the user mouses over a UI included in the object displayed on the display unit 140 will be described. In this case, the generation unit 121 outputs a sine wave having a wave number of 1 as a haptic signal. Since the determination unit 123 identifies the information processing device 10 as a host and identifies the information processing device 10 as the main host, the haptic signal is transmitted to the haptic feedback device 30 without being converted by the conversion unit 124.

Note that an example where, in a case where the user operates the UI, a signal having an amplitude greater than 0 is transmitted to the haptic feedback device 30, regardless of the host type of the host is illustrated here; however, in a case where the host is the information processing device 10, a signal having an amplitude of 0 may be transmitted. That is, in a case where the host is the information processing device 10, haptic feedback need not be provided to the user.

More specifically, as feedback on the operation of the UI displayed on the information processing device 10, the haptic signal generated by the generation unit 121 may be converted into a signal having an amplitude of 0 by the conversion unit 124. This is because, in a case where the user operates the UI displayed by the information processing device 10, the user can easily recognize the UI to be operated without haptic feedback as compared with a case where the user operates the UI displayed by the terminal device 20.

Note that the notification content is not limited to the notification content shown in Fig. 21, and for example, an event such as a drag operation on the UI, collision between the virtual object and the cursor, movement of the virtual object, change in size of the virtual object, change in angle of the virtual object, interference between virtual objects, or notification regarding software update may be notified.

For example, in a case where the user operates the haptic feedback device 30 to change the size of the virtual object, the app execution unit 122 may generate a haptic signal to ensure that feedback is provided when the zoom level becomes an integer. Furthermore, in a case where the user cannot visually recognize that the virtual objects have collided with each other, a haptic signal indicating interference between the virtual objects may be generated by the app execution unit 122.

Note that, in a case where the user operates the object displayed on the display unit 140 and where a three-dimensional operation is performed by a ring-shaped input device, a 6DoF mouse, or the like, the generation unit 121 may generate notification information regarding the object, similar to the notification information indicating the notification regarding the virtual object generated by the app execution unit 122.

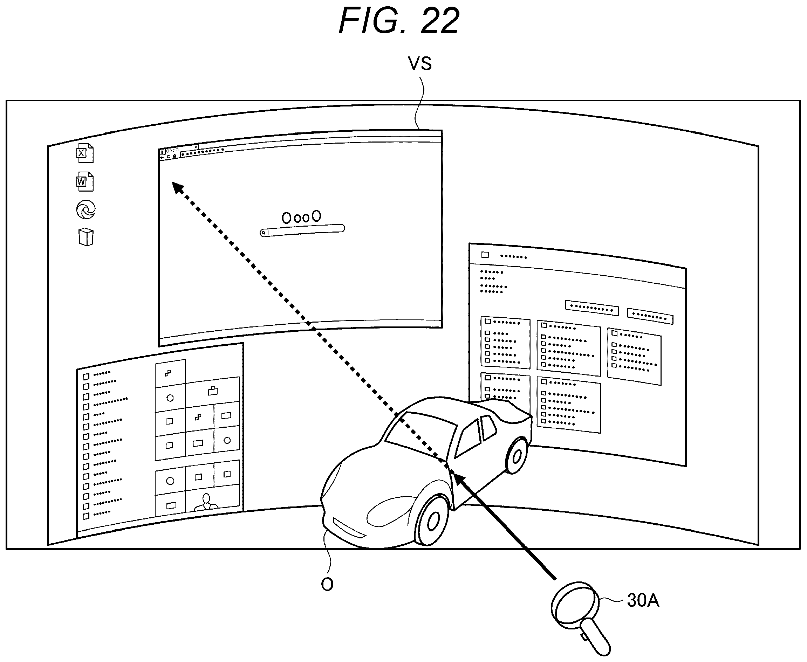

Next, another example of haptic feedback will be described with reference to Fig. 22. Fig. 22 is an explanatory diagram for describing an example of haptic feedback in a case where a virtual desktop screen and a virtual object displayed by the information processing device 10 are displayed on the terminal device 20.

The user can operate both the virtual desktop screen VS and the virtual object O of the information processing device 10 displayed on the terminal device 20 using the controller 30A.

For example, the determination unit 123 identifies the information processing device 10 as a host for a haptic signal indicating feedback on the operation performed on the virtual desktop screen VS by the user U. On the other hand, the determination unit 123 identifies the HMD app as a host for a haptic signal indicating feedback on the operation performed on the virtual object O by the user U. Furthermore, as described above, since the terminal device 20 displays the virtual object in addition to the virtual desktop screen VS, the determination unit 123 sets the priority level of the HMD app to be the highest. Therefore, when identifying the host type, the determination unit 123 identifies the host as the main host when the host is the HMD app, and identifies the host as the sub host when the host is the information processing device 10.

Here, the app execution unit 122 emits a ray that is a virtual laser beam in a direction indicated by the controller 30A in the virtual space. The ray may be displayed on the virtual space so as to be recognizable by the user or need not be displayed. The app execution unit 122 sets a collision position between the ray and the object in the virtual space to a pointer position to be operated by the user.

In a case where there is a plurality of positions where the ray and the object collide, the app execution unit 122, however, cannot determine which object the user intends to operate. In Fig. 22, the ray collides with the virtual object O and the virtual desktop screen VS. Therefore, the app execution unit 122 cannot determine whether the user intends to operate the virtual object O or the virtual desktop screen VS. Therefore, the app execution unit 122 may set the collision position between the object located closer to the controller 30A in the virtual space and the ray to the pointer position. For example, in Fig. 22, the virtual object O is set to the pointer position.

Furthermore, in a case where there is a plurality of positions where the ray and the object collide, the app execution unit 122 may generate a haptic signal indicating a sense of friction as a haptic signal indicating feedback on the operation of the virtual object O. The haptic signal indicating a sense of friction is a signal that provides a rough sensation to the user. The app execution unit 122 may generate a continuous waveform to continuously provide a sense of friction as long as there is a plurality of positions where the ray and the object collide.

Next, haptic feedback to the ring-shaped input device 30B will be described. In a case where a haptic signal or a signal obtained by conversion is transmitted to the ring-shaped input device 30B, the signal may be transmitted to a ring-shaped input device performing an operation on an object displayed on the display unit 140 or the terminal device 20, of the pair of ring-shaped input devices. Note that, in a case where the operation is performed using both the input devices, the signal may be transmitted to both the ring-shaped input devices, or may be transmitted to either one of the ring-shaped input devices.

Furthermore, the transmission destination of the signal may be determined on the basis of a distance between the ring-shaped input device 30B and the display unit 140 or the terminal device 20. The distance may be a distance between the ring-shaped input device 30B and the display unit 140 or the image display unit of the terminal device 20, or may be a distance between the ring-shaped input device 30B and the virtual object on the virtual space. For example, the signal may be transmitted to one of the pair of ring-shaped input devices having a shorter distance from the display unit 140.

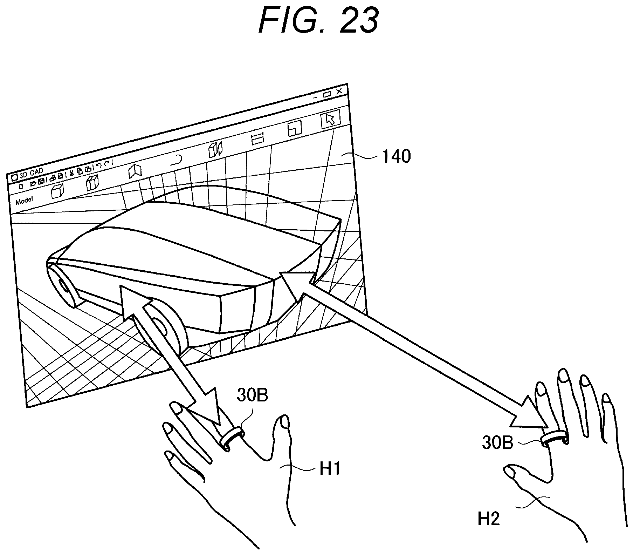

Fig. 23 is an explanatory diagram for describing an example where haptic feedback is provided by the ring-shaped input device 30B including the pair of two ring-shaped input devices. Fig. 23 illustrates a situation where a distance between a ring-shaped input device of the ring-shaped input device 30B worn on a left hand H1 and the display unit 140 is shorter than a distance between a ring-shaped input device worn on a right hand H2 and the display unit 140.

The control unit 120 calculates the distance from the display unit 140 on the basis of information regarding the position of the ring-shaped input device 30B received by the communication unit 110 from the ring-shaped input device 30B via the terminal device 20. The control unit 120 determines that the distance between the ring-shaped input device worn on the left hand H1 and the display unit 140 is shorter than the distance between the ring-shaped input device worn on the right hand H2 and the display unit 140. Then, the control unit 120 performs control to output the haptic signal or the signal obtained by conversion to the ring-shaped input device worn on the left hand H1.

### <<4. Example of operational process according to first embodiment>>

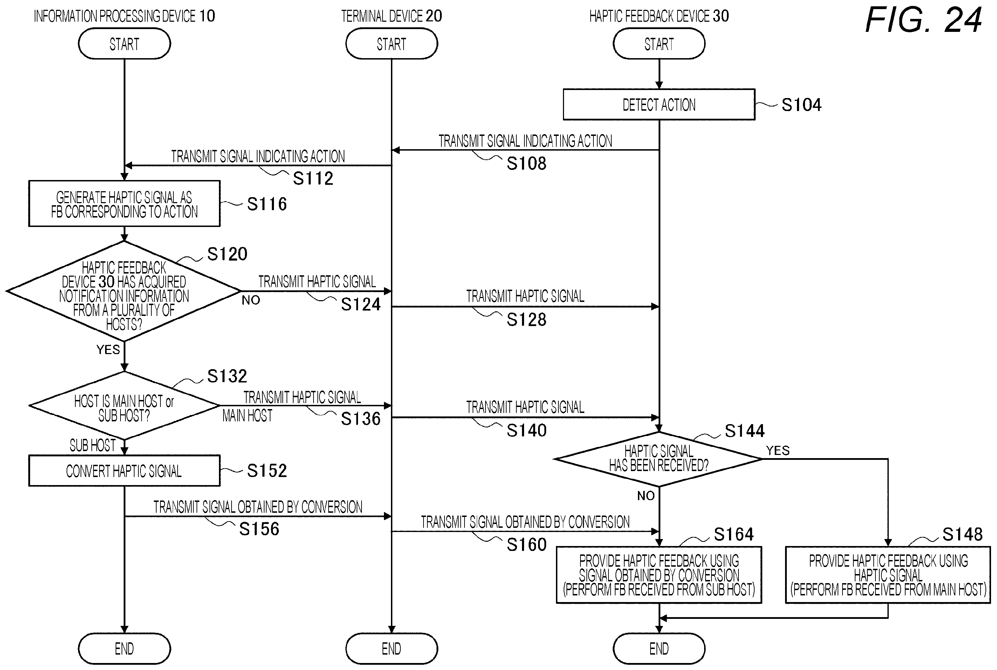

Next, an operational process flow of the information processing system according to the present embodiment will be described with reference to Fig. 24. Fig. 24 is a sequence diagram illustrating an example of the operational process flow of the information processing system according to the present embodiment.

As illustrated in Fig. 24, the haptic feedback device 30 detects a user's action (S104). The haptic feedback device 30 transmits a signal indicating the detected action to the terminal device 20 (S108). The terminal device 20 transmits the signal indicating the action received from the haptic feedback device 30 to the information processing device 10 (S112).

When the communication unit 110 of the information processing device 10 receives the signal indicating the action, the generation unit 121 or the app execution unit 122 generates a haptic signal as feedback (FB) corresponding to the action (S116).

Subsequently, the determination unit 123 determines whether or not the haptic feedback device 30 is in an environment where the haptic feedback device 30 can acquire notification information from a plurality of hosts (step S120). In a case where the determination unit 123 determines that haptic feedback device 30 is in an environment where the haptic feedback device 30 can acquire notification information from only one host (S120/No), the communication unit 110 transmits the generated haptic signal to the terminal device 20 (S124). The terminal device 20 transmits the received haptic signal to the haptic feedback device 30 (S128), and the processing proceeds to S144.

On the other hand, in a case where the determination unit 123 determines that the haptic feedback device 30 is in an environment where the haptic feedback device 30 can acquire notification information from a plurality of hosts (S120/Yes), the determination unit 123 determines whether the host type is the main host or the sub host (S132).

In a case where the host type is the main host (S132/main host), the communication unit 110 transmits the generated haptic signal to the terminal device 20 (S136). The terminal device 20 transmits the haptic signal received from the haptic feedback device 30 to the haptic feedback device 30 (S140).

Subsequently, the haptic feedback device 30 determines whether or not the haptic signal has been received (S144). In a case where the haptic signal has been received (S144/Yes), the haptic feedback device 30 performs haptic feedback using the haptic signal (S148). That is, the haptic feedback device 30 performs the FB received from the main host.

On the other hand, in a case where the host type is the sub host (S132/sub host), the conversion unit 124 converts the generated haptic signal (S152). The communication unit 110 transmits the signal obtained by conversion performed by the conversion unit 124 to the terminal device 20 (S156). The terminal device 20 transmits, to the haptic feedback device 30, the received signal that is a signal obtained by conversion (S160).

The haptic feedback device 30 provides haptic feedback using the received signal that is a signal obtained by conversion (S164). That is, the haptic feedback device 30 performs the FB received from the sub host.

### <<5. Second embodiment>>

Next, a second embodiment of the present disclosure will be described. In the first embodiment described above, the example where the operation of the terminal device 20 is controlled by the HMD app running on the information processing device 10 has been described. However, the overall operation of the terminal device, such as control of generation and display of a virtual object, and generation and conversion of a haptic signal, may be controlled by the control unit included in the terminal device. Furthermore, the overall operation of the terminal device may be controlled by the HMD app executed by the control unit included in the terminal device. In the second embodiment of the present disclosure, an example where the overall operation of the terminal device is controlled by the control unit included in the terminal device will be described.

Note that, among components included in an information processing system according to the second embodiment of the present disclosure, components different from the components included in the information processing system according to the first embodiment of the present disclosure will be mainly described, and detailed description of the same components as the information processing system according to the first embodiment of the present disclosure will be omitted.

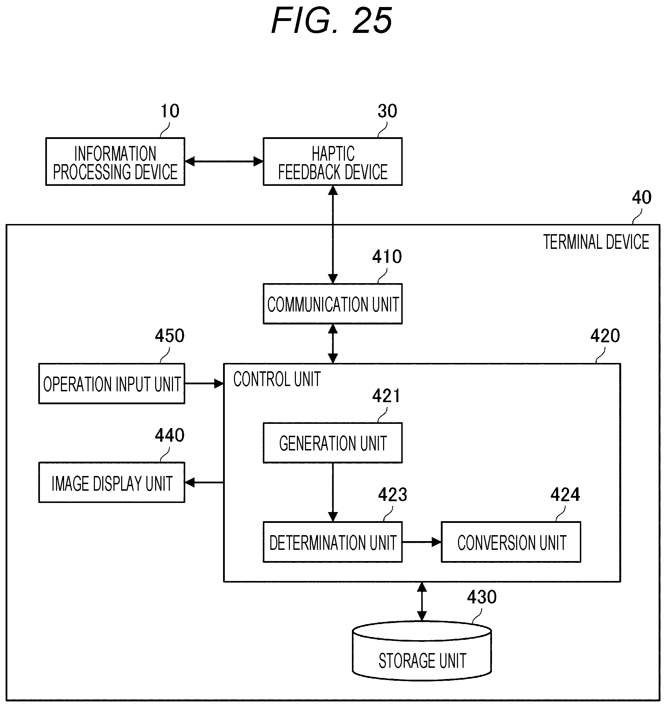

The second embodiment of the present disclosure will be described with reference to Fig. 25. Fig. 25 is an explanatory diagram illustrating a configuration of the information processing system and an internal configuration of a terminal device 40 according to the second embodiment of the present disclosure. In the second embodiment of the present disclosure, the haptic feedback device 30 is connected to the information processing device 10 and the terminal device 40 and exchanges various kinds of information. Furthermore, the user can input an operation from the haptic feedback device 30 to an object displayed on the information processing device 10 or a virtual object displayed on the terminal device 40.

The haptic feedback device 30 transmits a signal indicating the operation input by the user or a signal indicating the user's action to the information processing device 10 or the terminal device 40. More specifically, the haptic feedback device 30 transmits, to the information processing device 10, a signal indicating an operation input for or an action on the object displayed on the information processing device 10. On the other hand, the haptic feedback device 30 transmits, to the terminal device 40, a signal indicating an operation input for or an action on the virtual object displayed on the terminal device 40.

Furthermore, the haptic feedback device 30 transmits information indicating a connection status with the information processing device 10 and the terminal device 40 to the information processing device 10 and the terminal device 40. Furthermore, the haptic feedback device 30 receives, from the terminal device 40, information that is used by the determination unit 123 of the information processing device 10 to determine the host priority level, such as a wearing status of the terminal device 40 worn by the user, and transmits the information to the information processing device 10. The determination unit 123 of the information processing device 10 determines the host priority level on the basis of information obtained through communication between the communication unit 110 and the haptic feedback device 30.

Next, details of the terminal device 40 (an example of an information processing device) according to the second embodiment of the present disclosure will be described. As illustrated in Fig. 25, the terminal device 40 includes a communication unit 410, a control unit 420, a storage unit 430, an image display unit 440, and an operation input unit 450.

### (Communication unit 410)

The communication unit 410 establishes a communication connection with an external device and transmits and receives data. For example, the communication unit 110 transmits and receives data to and from the haptic feedback device 30. The communication unit 410 can establish a communication connection with the haptic feedback device 30 or the like over, for example, a wired or wireless LAN, Wi-Fi, Bluetooth, or the like.

For example, the communication unit 410 receives, from the haptic feedback device 30, a signal indicating a user's action detected by the haptic feedback device 30. Furthermore, the communication unit 410 transmits a haptic signal generated by a generation unit 421 to be described later or a signal obtained by conversion performed by a conversion unit 424 to be described later to the haptic feedback device 30.

### (Control unit 420)

The control unit 420 functions as an arithmetic processing device and a control device, and controls the overall operation in the terminal device 40 in accordance with various programs. The control unit 420 controls output such as screen display and audio output by the image display unit 440 to be described later, for example. Furthermore, the control unit 420 constructs a virtual space to be displayed on the image display unit 440.

The control unit 420 is implemented by, for example, an electronic circuit such as a CPU or a microprocessor. Furthermore, the control unit 420 may include a ROM that stores programs, operation parameters, and the like to be used, and a RAM that temporarily stores parameters and the like that change as necessary.

Furthermore, the control unit 420 according to the present embodiment can also function as the generation unit 421, a determination unit 423, and the conversion unit 424.

### (Generation unit 421)

The generation unit 421 generates a haptic signal. For example, the generation unit 421 generates the haptic signal on the basis of a signal indicating the user's action detected by the haptic feedback device 30. The haptic signal generated by the generation unit 421 is similar to the haptic signal generated by the app execution unit 122 of the information processing device 10 according to the first embodiment of the present disclosure.

### (Determination unit 423)

The determination unit 423 identifies a host that is the output source of the haptic signal generated by the generation unit 421 to acquire a host type as a determination result. The determination unit 423 identifies the host type of the host in a substantially similar manner to the determination unit 123 of the information processing device 10. For example, in a case where an application that has generated notification information is the HMD app, the determination unit 423 may identify the HMD app or the HMD as a host.

### (Conversion unit 424)

The conversion unit 424 controls the conversion process on the haptic signal generated by the generation unit 421 on the basis of the host type identified by the determination unit 423. The conversion unit 424 controls the conversion process on the haptic signal in a similar manner to the conversion unit 124 of the information processing device 10.

### (Storage unit 430)

The storage unit 430 is implemented by a ROM that stores programs, operation parameters, and the like to be used for processing of the control unit 420, and a RAM that temporarily stores parameters and the like that change as necessary.

### (Image display unit 440)

For example, in a case where the terminal device 40 is configured as an HMD, the image display unit 440 includes left and right screens respectively fixed to the user's left and right eyes, and displays a left-eye image and a right-eye image. The image display unit 440 includes, for example, a display panel such as a liquid crystal display or an organic electro luminescence (EL) display, or a laser scanning display such as a retina projection display. Furthermore, the image display unit 440 may include an imaging optical system that enlarges and projects the display screen to form an enlarged virtual image having a predetermined field of view on the user's pupil.

### (Operation input unit 450)

The operation input unit 450 receives an operation from the user, and outputs input information to the control unit 420. The operation input unit 450 is implemented by a button, a sensor, or the like, and receives, for example, an operation input by the user such as power on or off of the terminal device 40 or adjustment of the brightness of the image display unit 440.

According to the second embodiment described above, the information processing device 10 and the terminal device 40 serving as hosts cause their own conversion units to convert the generated haptic signal. With such a configuration, even in a case where the information processing device 10 does not function as a plurality of hosts, it is possible to make the user recognize notifications from different hosts. Note that the information processing device 10 according to the present embodiment need not have the function of the app execution unit 122.

### <<6. Third embodiment>>

Next, a third embodiment of the present disclosure will be described. In the first embodiment described above, the example where the conversion process on the haptic signal is performed by the conversion unit 124 of the information processing device 10 has been described. Note that the conversion process on the haptic signal may be performed by a haptic feedback device 50. In the third embodiment of the present disclosure, an example where the conversion process on the haptic signal is performed by the haptic feedback device 50 (an example of an information processing device) will be described.

Note that, among components included in an information processing system according to the third embodiment of the present disclosure, components different from the components included in the information processing system according to the first embodiment of the present disclosure will be mainly described, and detailed description of the same components as the information processing system according to the first embodiment of the present disclosure will be omitted.

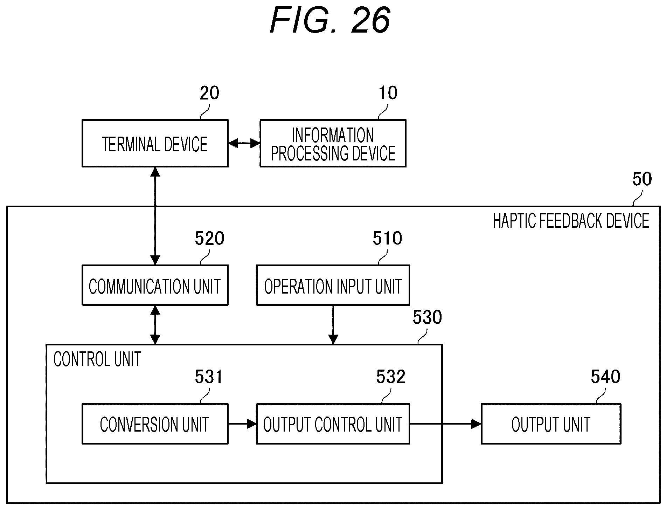

The third embodiment of the present disclosure will be described with reference to Fig. 26. Fig. 26 is an explanatory diagram illustrating a configuration of the information processing system and an internal configuration of the haptic feedback device 50 according to the third embodiment of the present disclosure. In the third embodiment of the present disclosure, the communication unit 110 of the information processing device 10 transmits the haptic signal generated by the generation unit 121 or the app execution unit 122 and the determination result from the determination unit 123 to the haptic feedback device 50. The haptic feedback device 50 performs, on the basis of the received haptic signal and determination result, the conversion process on the haptic signal.

### <6-1. Configuration example of haptic feedback device 50>

Hereinafter, details of the haptic feedback device 50 according to the third embodiment of the present disclosure will be described. As illustrated in Fig. 26, the haptic feedback device 50 includes an operation input unit 510, a communication unit 520, a control unit 530, and an output unit 540.

### (Operation input unit 510)

The operation input unit 510 is implemented by a button, a sensor, or the like, and detects an operation input by the user or a user's action. An example of the input operation or action detected by the operation input unit 510 is as described in the first embodiment.

### (Communication unit 520)

The communication unit 520 establishes a communication connection with an external device and transmits and receives data. For example, the communication unit 520 transmits and receives data to and from the terminal device 20. The communication unit 520 can establish a communication connection with the terminal device 20 or the like over, for example, a wired or wireless LAN, Wi-Fi, Bluetooth, or the like.

For example, the communication unit 520 transmits a signal indicating the user's action detected by the operation input unit 510 to the information processing device 10 via the terminal device 20. Furthermore, the communication unit 520 receives the haptic signal generated by the generation unit 121 or the app execution unit 122 of the information processing device 10 and the determination result that is a result of identifying the host type by the determination unit 123 from the information processing device 10 via the terminal device 20.

### (Control unit 530)

The control unit 530 functions as an arithmetic processing device and a control device, and controls the overall operation in the information processing device 10 in accordance with various programs. The control unit 530 is implemented by, for example, an electronic circuit such as a CPU or a microprocessor. Furthermore, the control unit 530 may include a ROM that stores programs, operation parameters, and the like to be used, and a RAM that temporarily stores parameters and the like that change as necessary.

The control unit 530 according to the present embodiment can also function as a conversion unit 531 and an output control unit 532.

### (Conversion unit 531)

The conversion unit 531 controls the conversion process on the haptic signal received by the communication unit 520 on the basis of the host type indicated by the determination result received by the communication unit 520. The conversion unit 531 controls the conversion process on the haptic signal in a similar manner to the conversion unit 124 of the information processing device 10 according to the first embodiment.

### (Output control unit 532)

The output control unit 532 controls output of vibrations from the output unit 540 to be described later, the vibrations being indicated by the signal obtained by conversion performed by the conversion unit 531 or the haptic signal received by the communication unit 520. For example, in a case where the determination result received by the communication unit 520 includes information indicating that the host type is the main host, the output control unit 532 may control the output unit 540 to output the vibrations indicated by the haptic signal received by the communication unit 520. Furthermore, in a case where the haptic signal is converted by the conversion unit 531, the output control unit 532 may control the output unit 540 to output the vibrations indicated by the signal obtained by conversion performed by the conversion unit 531.

### (Output unit 540)

The output unit 540 is an example of a haptic feedback unit that outputs vibrations (provides haptic feedback) on the basis of the haptic signal or the signal obtained by conversion performed by the conversion unit 531 under the control of the output control unit 532.

### <6-2. Example of operational process according to third embodiment>

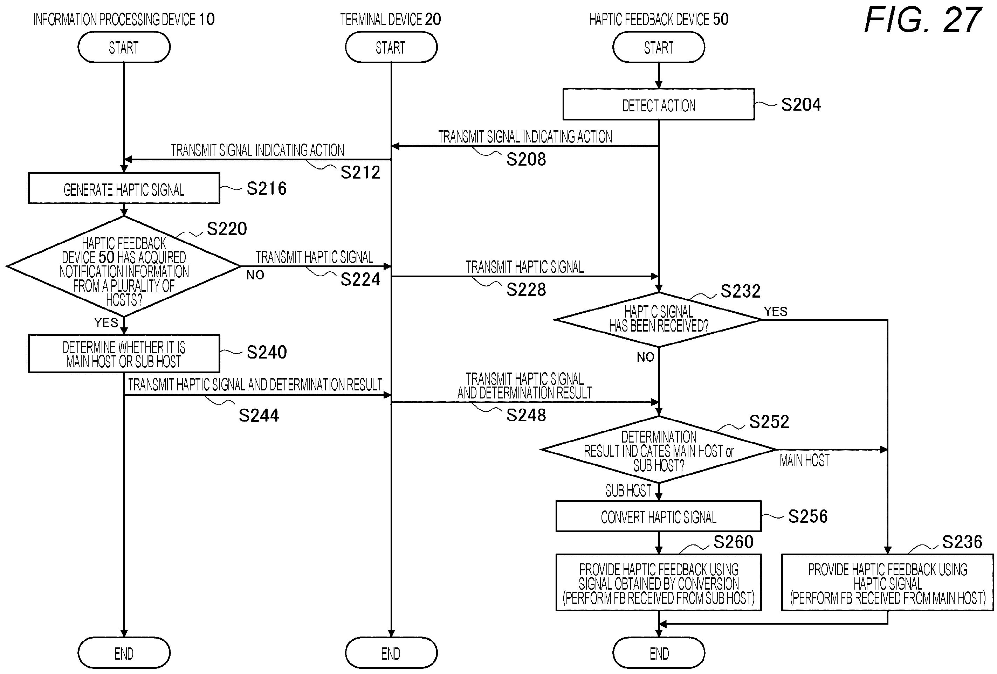

Next, an operational process flow of the information processing system according to the third embodiment of the present disclosure will be described with reference to Fig. 27. Fig. 27 is a sequence diagram illustrating an example of the operational process flow of the information processing system according to the third embodiment of the present disclosure.

As illustrated in Fig. 27, the operation input unit 510 of the haptic feedback device 50 detects a user's action (S204). The communication unit 520 transmits a signal indicating the detected action to the terminal device 20 (S208). The terminal device 20 transmits the signal indicating the action received from the haptic feedback device 50 to the information processing device 10 (S212).

When the communication unit 110 of the information processing device 10 receives the signal indicating the action, the generation unit 121 or the app execution unit 122 generates a haptic signal as FB corresponding to the action (S216).

Subsequently, the determination unit 123 determines whether or not the haptic feedback device 50 is in an environment where the haptic feedback device 50 can acquire notification information from a plurality of hosts (step S220). In a case where the determination unit 123 determines that the haptic feedback device 50 is in an environment where the haptic feedback device 50 can acquire notification information from only one host (S220/No), the communication unit 110 transmits the generated haptic signal to the terminal device 20 (S224). The terminal device 20 transmits the received haptic signal to the haptic feedback device 50 (S228).

Subsequently, the control unit 530 of the haptic feedback device 50 determines whether or not the communication unit 520 has received the haptic signal from the terminal device 20 (S232). In a case where the communication unit 520 has received the haptic signal (S232/Yes), the output control unit 532 controls the output unit 540 to provide haptic feedback using the haptic signal (S236). That is, the output unit 540 performs the FB received from the main host.

In a case where the communication unit 520 has not received the haptic signal (S232/No), the processing proceeds to S252.

On the other hand, in a case where the determination unit 123 determines that the haptic feedback device 50 is in an environment where the haptic feedback device 50 can acquire notification information from a plurality of hosts (S220/Yes), the determination unit 123 determines whether the host type is the main host or the sub host (S240).

Subsequently, the communication unit 110 transmits the host type determination result and the generated haptic signal to the terminal device 20 (S244). The terminal device 20 transmits the determination result and haptic signal received from the haptic feedback device 50 to the haptic feedback device 50 (S248).

In a case where the host type indicated by the determination result received by the communication unit 520 is the sub host (S252/sub host), the conversion unit 531 of the haptic feedback device 50 converts the haptic signal received by the communication unit 520 (S256). Then, the output control unit 532 controls the output unit 540 to provide haptic feedback using the signal obtained by conversion (S260). That is, the output unit 540 performs the FB received from the sub host.

On the other hand, in a case where the host type indicated by the determination result received by the communication unit 520 is the main host (S252/main host), the output control unit 532 controls the output unit 540 to provide haptic feedback using the haptic signal received by the communication unit 520 (S148). That is, the output unit 540 performs the FB received from the main host.

### <<7. Fourth embodiment>>

The third embodiment of the present disclosure has been described above. Next, a fourth embodiment of the present disclosure will be described. In the third embodiment of the present disclosure, the example where the host type is identified by the determination unit 123 of the information processing device 10 has been described. The host type, however, may be identified by the haptic feedback device.

Furthermore, in the third embodiment of the present disclosure, the example where the haptic signal is generated by the information processing device 10 has been described. The haptic signal, however, may be generated by both the information processing device 10 and the terminal device 20 serving as hosts. In the fourth embodiment of the present disclosure, an example where the host type is identified by the haptic feedback device and the haptic signal is generated by each host will be described.

Note that, among components included in an information processing system according to the fourth embodiment of the present disclosure, components different from the components included in the information processing system according to the third embodiment of the present disclosure will be mainly described, and detailed description of the same components as the information processing system according to the third embodiment of the present disclosure will be omitted.

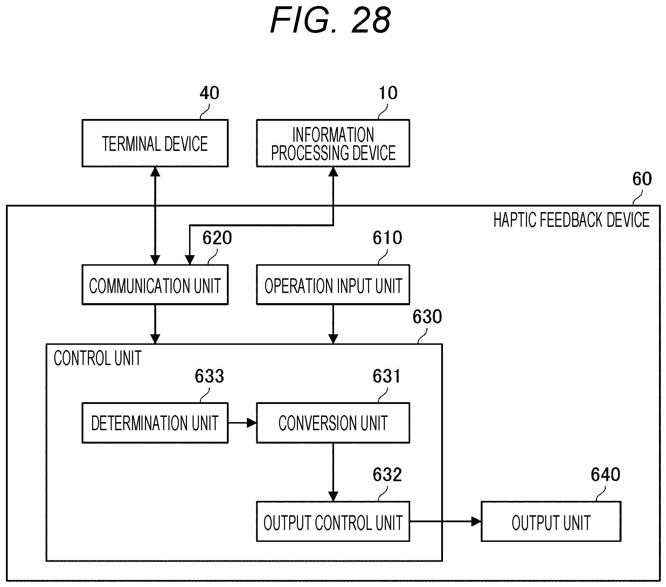

The fourth embodiment of the present disclosure will be described with reference to Fig. 28. Fig. 28 is an explanatory diagram illustrating a configuration of the information processing system and an internal configuration of a haptic feedback device 60 according to the fourth embodiment of the present disclosure. In the fourth embodiment of the present disclosure, the haptic feedback device 60 communicates with the information processing device 10 and the terminal device 40. Here, the terminal device 40 according to the fourth embodiment of the present disclosure has a similar function to the terminal device 40 according to the second embodiment of the present disclosure. That is, the overall operation of the terminal device 40 is controlled by the control unit 420 included in the terminal device 40.

When transmitting the haptic signal generated by the generation unit 121, the communication unit 110 of the information processing device 10 according to the present embodiment transmits identification information indicating that the host is the information processing device 10 to the haptic feedback device 60 together with the haptic signal. Furthermore, when transmitting the haptic signal generated by the generation unit 421, the communication unit 410 of the terminal device 40 transmits identification information indicating that the host is the terminal device 40 to the haptic feedback device 60 together with the haptic signal.

Next, details of the haptic feedback device 60 according to the fourth embodiment of the present disclosure will be described. As illustrated in Fig. 26, the haptic feedback device 60 includes an operation input unit 610, a communication unit 620, a control unit 630, and an output unit 640. Furthermore, the control unit 630 according to the present embodiment can also function as a conversion unit 631, an output control unit 632, and a determination unit 633. Here, the operation input unit 610, the output control unit 632, and the output unit 640 have similar functions to the operation input unit 510, the output control unit 532, and the output unit 540 of the haptic feedback device 50 according to the third embodiment of the present disclosure, and their description therefore will be omitted.

### (Communication unit 620)

The communication unit 620 transmits and receives data to and from the information processing device 10 and the terminal device 40. For example, the communication unit 620 transmits a signal indicating a user's action detected by the operation input unit 610 to the information processing device 10 or the terminal device 40. More specifically, the communication unit 620 transmits, to the information processing device 10, a signal indicating an operation input for or an action on the object displayed on the information processing device 10. On the other hand, the communication unit 620 transmits, to the terminal device 40, a signal indicating an operation input for or an action on the virtual object displayed on the terminal device 40. Furthermore, the communication unit 620 receives identification information including information indicating whether the host is the information processing device 10 or the terminal device 40 from the information processing device 10 or the terminal device 40.

Furthermore, the haptic feedback device 60 receives, from the terminal device 40, information that is used by the determination unit 633 to determine the host priority level, such as the wearing status of the terminal device 40 worn by the user.

### (Determination unit 633)

The determination unit 633 identifies a host that is the output source of the haptic signal generated by the generation unit 121 of the information processing device 10 or the generation unit 421 of the terminal device 40 to acquire a host type as a determination result. The determination unit 633 may use the identification information acquired by the communication unit 620 as a host type determination result. Furthermore, the determination unit 633 may determine the host priority level in a similar manner to the determination unit 123 of the information processing device 10 according to the first embodiment, and use the priority level as a type. At this time, the determination unit 633 may determine the host priority level on the basis of the information received by the communication unit 620, the information being used to determine the host priority level.

### (Conversion unit 631)

The conversion unit 631 controls the conversion process on the haptic signal received by the communication unit 620 on the basis of the host type indicated by the determination result from the determination unit 633. The conversion unit 631 controls the conversion process on the haptic signal in a similar manner to the conversion unit 124 of the information processing device 10 according to the first embodiment.

According to the fourth embodiment described above, the determination of the host type and the conversion process on the haptic signal are performed by the haptic feedback device 60. With such a configuration, it is possible to make the user recognize notifications from different hosts, regardless of the type of the connected information processing device or terminal device.

### (Supplement)

Note that, in the fourth embodiment described above, the example where the host type is identified by the determination unit 633 of the haptic feedback device 60 has been used, but the host type may be identified by both the information processing device 10 and the terminal device 40. In this case, the determination results of the information processing device 10 and the terminal device 40 are transmitted from the information processing device 10 and the terminal device 40 to the haptic feedback device 60. Then, the conversion unit 631 controls the conversion process on the haptic signal on the basis of the host type indicated by the determination result received by the communication unit 620.

Furthermore, according to the fourth embodiment described above, the example where the haptic feedback device 60 is connected to the information processing device 10 and the terminal device 40, and the control unit included in the terminal device 40 itself controls the overall operation of the terminal device has been described. The terminal device, however, need not be connected to the haptic feedback device 60, and may be controlled by the application (HMD app) executed by the information processing device 10 to run the terminal device, in a similar manner to the terminal device 20 according to the first embodiment. In this case, when outputting the haptic signal generated by the app execution unit 122, the communication unit 110 of the information processing device 10 transmits identification information indicating that the host is the HMD app to the haptic feedback device 60 together with the haptic signal.

### <<8. Hardware configuration example>>

Each embodiment of the present disclosure has been described above. The information processing described above is achieved by cooperation of software and hardware. Hereinafter, a hardware configuration example that can be applied to the information processing device 10, the terminal device 20, the haptic feedback device 30, the terminal device 40, the haptic feedback device 50, and the haptic feedback device 60 will be described.

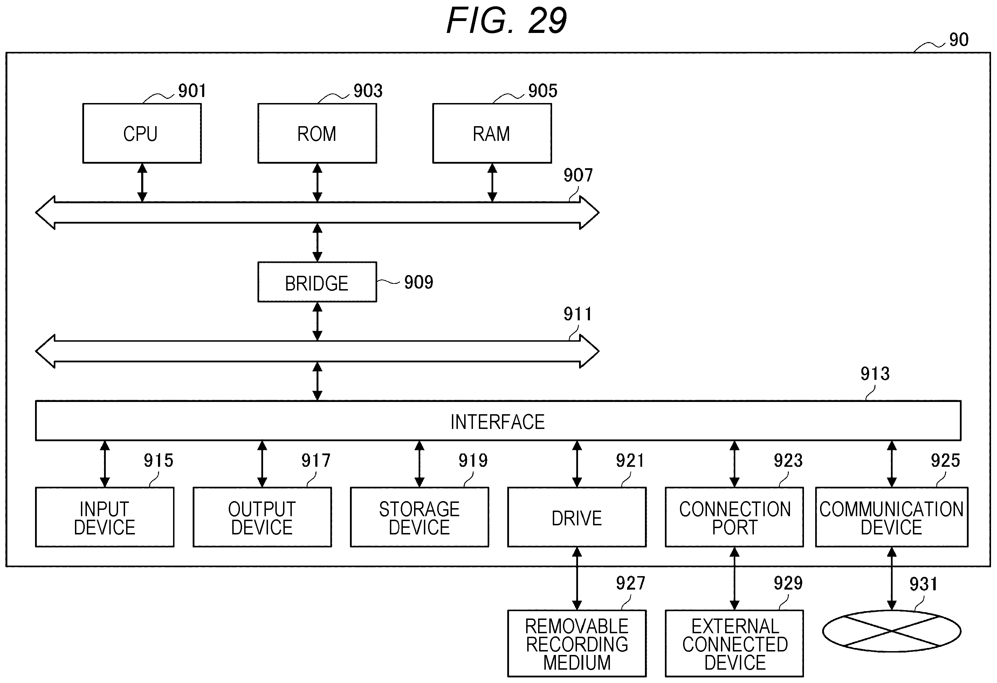

Fig. 29 is a block diagram illustrating an example of an information processing device 90. Note that a hardware configuration example of the information processing device 90 to be described below is merely an example of a hardware configuration of the information processing device 10, the terminal device 20, the haptic feedback device 30, the terminal device 40, the haptic feedback device 50, and the haptic feedback device 60. Therefore, the information processing device 10, the terminal device 20, the haptic feedback device 30, the terminal device 40, the haptic feedback device 50, and the haptic feedback device 60 each need not necessarily have all the hardware components illustrated in Fig. 29. Furthermore, some of the hardware components illustrated in Fig. 29 need not be provided in the information processing device 10, the terminal device 20, the haptic feedback device 30, the terminal device 40, the haptic feedback device 50, and the haptic feedback device 60.

As illustrated in Fig. 29, the information processing device 90 includes a CPU 901, a read only memory (ROM) 903, and a RAM 905. Furthermore, the information processing device 90 may include a host bus 907, a bridge 909, an external bus 911, an interface 913, an input device 915, an output device 917, a storage device 919, a drive 921, a connection port 923, and a communication device 925. The information processing device 90 may include a processing circuit such as a graphics processing unit (GPU), a digital signal processor (DSP), or an application specific integrated circuit (ASIC) instead of or in addition to the CPU 901.

The CPU 901 functions as an arithmetic processing device and a control device, and controls all or part of the operation in the information processing device 90 in accordance with various programs recorded in the ROM 903, the RAM 905, the storage device 919, or a removable recording medium 927. The ROM 903 stores programs, operation parameters, and the like used by the CPU 901. The RAM 905 temporarily stores a program used in execution of the CPU 901, parameters that change as necessary during the execution, and the like. The CPU 901, the ROM 903, and the RAM 905 are mutually connected by the host bus 907 including an internal bus such as a CPU bus. Moreover, the host bus 907 is connected to the external bus 911 such as a peripheral component interconnect/interface (PCI) bus via the bridge 909.

The CPU 901 can cooperate with the ROM 903, the RAM 905, and software to implement the functions of the control unit 120, the control unit 330, and the control unit 420, for example.

The input device 915 is, for example, a device, such as a button, operated by the user. The input device 915 may include a mouse, a keyboard, a touch panel, a switch, a lever, or the like. Furthermore, the input device 915 may include a microphone that detects user's voice. The input device 915 may be, for example, a remote control device using infrared rays or other radio waves, or an external connected device 929 such as a mobile phone adapted to the operation of the information processing device 90. The input device 915 includes an input control circuit that generates an input signal on the basis of information input by the user and outputs the input signal to the CPU 901. By operating the input device 915, the user inputs various kinds of data or gives an instruction to perform a processing operation, to the information processing device 90.

Furthermore, the input device 915 may include an imaging device and a sensor. The imaging device is, for example, a device that generates a captured image by imaging a real space using various members such as an imaging element such as a charge coupled device (CCD) or a complementary metal oxide semiconductor (CMOS), and a lens for controlling image formation of a subject image on the imaging element. The imaging device may capture a still image or may capture a moving image.

Examples of the sensor include various types of sensors, such as a range sensor, an accelerometer, a gyroscope, a geomagnetic sensor, a vibration sensor, a light sensor, and a sound sensor. The sensor acquires, for example, information regarding the state of the information processing device 90 itself, such as a posture of a housing of the information processing device 90, and information regarding the surrounding environment of the information processing device 90, such as brightness and noise around the information processing device 90. Furthermore, the sensor may include a global positioning system (GPS) sensor that receives a GPS signal to measure the latitude, longitude, and altitude of the device.

The output device 917 includes a device that can visually or audibly notify the user of acquired information. The output device 917 may be, for example, a display device such as a liquid crystal display (LCD) or an organic electro-luminescence (EL) display, an audio output device such as a speaker or a headphone, or the like. Furthermore, the output device 917 may include a plasma display panel (PDP), a projector, a hologram, a printer device, or the like. The output device 917 outputs a result of processing performed by the information processing device 90 as a text or visual data such an image, or outputs the result as a sound such as voice or audio. Furthermore, the output device 917 may include a lighting device or the like that brightens the surroundings.

The storage device 919 is a data storage device configured as an example of a storage unit of the information processing device 90. The storage device 919 includes, for example, a magnetic storage device such as a hard disk drive (HDD), a semiconductor storage device, an optical storage device, a magneto-optical storage device, or the like. This storage device 919 stores programs to be executed by the CPU 901 or various kinds of data, various kinds of data acquired from the outside, and the like.

The drive 921 is a reader/writer for the removable recording medium 927 such as a magnetic disk, an optical disc, a magneto-optical disk, or a semiconductor memory and is built in or externally attached to the information processing device 90. The drive 921 reads information recorded in the attached removable recording medium 927 and outputs the information to the RAM 905. Furthermore, the drive 921 writes a record to the attached removable recording medium 927.

The connection port 923 is a port for connecting a device directly to the information processing device 90. The connection port 923 may be, for example, a universal serial bus (USB) port, an IEEE1394 port, a small computer system interface (SCSI) port, or the like. Furthermore, the connection port 923 may be an RS-232C port, an optical audio terminal, a high-definition multimedia interface (HDMI (registered trademark)) port, or the like. By connecting the external connected device 929 to the connection port 923, various kinds of data can be exchanged between the information processing device 90 and the external connected device 929.

The communication device 925 is, for example, a communication interface including a communication device or the like for connecting to a local network or a communication network with a wireless base station. The communication device 925 may be, for example, a communication card for a wired or wireless LAN, Bluetooth (registered trademark), Wi-Fi, or a wireless USB (WUSB). Furthermore, the communication device 925 may be a router for optical communication, a router for asymmetric digital subscriber line (ADSL), a modem for various types of communication, or the like. The communication device 925 transmits and receives signals and the like using a predetermined protocol such as TCP/IP over the Internet or with other communication devices, for example. Furthermore, the local network or the communication network with the base station to which the communication device 925 is connected is a network connected in a wired or wireless manner, and examples of the network include the Internet, a home LAN, infrared communication, radio wave communication, satellite communication, and the like.

### <<9. Supplement>>

Although the preferred embodiments of the present disclosure have been described above in detail with reference to the accompanying drawings, the technical scope of the present disclosure is not limited to such examples. It is obvious that those with ordinary skill in the technical field of the present disclosure can conceive various alterations or corrections within the scope of the technical idea recited in the claims, and it is naturally understood that these alterations or corrections also fall within the technical scope of the present disclosure.

For example, in the embodiment described above, the example where the information processing device 10 communicates with the haptic feedback device 30 via the terminal device 20 has been described, but the present technology is not limited to such an example. For example, the information processing device 10 may be directly connected to the haptic feedback device 30, and the terminal device 20 and the haptic feedback device 30 need not be connected. In this case, the terminal device 20 and the haptic feedback device 30 exchange various kinds of information via the information processing device 10.

Furthermore, in the embodiment described above, the example where the terminal device 20 is an HMD or the like that is worn on the user's head and provides a virtual space to the user has been mainly described, but the present disclosure is not limited to such an example. For example, the terminal device 20 may be a mobile entity such as a vehicle or a train.

Furthermore, in the embodiment described above, the example where the haptic feedback device 30 has the function of the operation input unit has been described, but the haptic feedback device 30 need not include the operation input unit. For example, the haptic feedback device 30 may be a glove, a wristband, a wristwatch, or the like capable of providing haptic feedback.

Furthermore, in the embodiment described above, the example where the haptic signal includes a parameter value representing vibrations has been described, but the haptic signal is not limited to such an example. For example, the haptic signal may be a waveform representing vibrations. In this case, the conversion unit 124 may perform the conversion process by performing pitch shift or filtering on the haptic signal or performing the fast Fourier transform (FFT) process on the haptic signal.

Furthermore, it is also possible to create one or more computer programs for causing hardware such as the CPU, the ROM, and the RAM built in the information processing device 10, the terminal device 20, or the haptic feedback device 30 described above to exhibit the function of the information processing device 10, the terminal device 20, or the haptic feedback device 30. Furthermore, a computer-readable storage medium that stores the one or more computer programs is also provided.

Furthermore, the effects described in the present specification are merely exemplary or illustrative, and not restrictive. That is, the technology according to the present disclosure can exhibit other effects apparent to those skilled in the art from the description of the present specification, in addition to or instead of the effects described above.

Note that the following configurations also fall within the technical scope of the present disclosure.
(1) An information processing device including a control unit that converts a haptic signal corresponding to notification information transmitted by each of a plurality of hosts into a different haptic signal on the basis of a determination result based on identification of host types of the plurality of hosts.
(2) The information processing device according to the above (1), in which the control unit controls a conversion process on the haptic signal corresponding to the notification information.
(3) The information processing device according to the above (1) or (2), in which
   a plurality of display objects corresponding on a one-to-one basis to the plurality of hosts is displayed on a virtual space displayed on a display unit of a second information processing device,
   the notification information is generated on the basis of a user's operation on each of the display objects using a haptic feedback device, and
   the haptic signal is provided by the haptic feedback device.
(4) The information processing device according to the above (3), in which each of the hosts is an application that is executed by at least one of the information processing device or the second information processing device.
(5) The information processing device according to any one of the above (1) to (4), in which the control unit acquires the host type based on a priority level of each of the hosts as the determination result, and controls a conversion process on the haptic signal according to the host type based on the priority level of the host.
(6) The information processing device according to the above (5), in which the determination result includes a determination result of whether each of the hosts is a main host or a sub host as the host type based on the priority level.
(7) The information processing device according to any one of the above (1) to (6), in which the control unit acquires identification information for identifying each of the hosts as the determination result, and controls a conversion process on the haptic signal according to the identification information.
(8) The information processing device according to the above (7), in which the identification information includes information indicating whether each of the hosts is a head mounted display (HMD) or a personal computer (PC).
(9) The information processing device according to the above (7), in which the identification information includes information indicating whether each of the hosts is an application that is executed on a PC to run an HMD or a PC.
(10) The information processing device according to the above (6), in which, in a case of determining that a user is using an application executed on a PC to run an HMD on the basis of a user's operation on a display of an HMD, the control unit identifies the HMD application as the main host and controls a conversion process on the haptic signal corresponding to the notification information generated in response to the user's operation.
(11) The information processing device according to the above (6) or (10), in which, in a case of determining that a user is using a 2D application executed on a PC on the basis of a user's operation on a display of the PC, the control unit identifies the PC as the main host and controls a conversion process on the haptic signal corresponding to the notification information generated in response to the user's operation.
(12) The information processing device according to the above (2), in which the conversion process includes a process of converting a frequency, amplitude, output period, or waveform included in the haptic signal.
(13) The information processing device according to the above (2), in which the control unit controls a conversion process on the haptic signals from the plurality of hosts to convert the haptic signals into haptic signals with non-overlapping frequency bands.
(14) The information processing device according to the above (2), in which the control unit controls a conversion process on the haptic signals from the plurality of hosts to convert the haptic signals into haptic signals with non-overlapping amplitudes.
(15) The information processing device according to any one of the above (1) to (14), serving as a host further including a communication unit, in which
   the control unit controls
   a process of outputting the notification as the host, and
   a process of transmitting the notification from the communication unit to a haptic feedback device.
(16) The information processing device according to any one of the above (1) to (15), serving as a haptic feedback device further including a communication unit and at least one haptic feedback unit, in which
   the communication unit receives the notification from each of the hosts, and
   the control unit inputs the notification to the at least one haptic feedback unit.
(17) The information processing device according to the above (3) or (4), in which the haptic signal is transmitted to the haptic feedback device via the second information processing device.
(18) An information processing method including converting a haptic signal corresponding to notification information transmitted by each of a plurality of hosts into a different haptic signal on the basis of a determination result based on identification of host types of the plurality of hosts.
(19) A program for causing a computer to function as:
   a control unit that performs a process of converting a haptic signal corresponding to notification information transmitted by each of a plurality of hosts into a different haptic signal on the basis of a determination result based on identification of host types of the plurality of hosts.

### REFERENCE SIGNS LIST

- 10: Information processing device
- 20: Terminal device
- 30: Haptic feedback device
- 110: Communication unit
- 120: Control unit
- 121: Generation unit
- 122: App execution unit
- 123: Determination unit
- 124: Conversion unit
- 130: Storage unit
- 140: Display unit
- 150: Operation input unit

## Claims

1. An information processing device comprising a control unit that converts a haptic signal corresponding to notification information transmitted by each of a plurality of hosts into a different haptic signal on a basis of a determination result based on identification of host types of the plurality of hosts.

2. The information processing device according to claim 1, wherein the control unit controls a conversion process on the haptic signal corresponding to the notification information.

3. The information processing device according to claim 1, wherein
a plurality of display objects corresponding on a one-to-one basis to the plurality of hosts is displayed on a virtual space displayed on a display unit of a second information processing device,
the notification information is generated on a basis of a user's operation on each of the display objects using a haptic feedback device, and
the haptic signal is provided by the haptic feedback device.

4. The information processing device according to claim 3, wherein each of the hosts is an application that is executed by at least one of the information processing device or the second information processing device.

5. The information processing device according to claim 1, wherein the control unit acquires the host type based on a priority level of each of the hosts as the determination result, and controls a conversion process on the haptic signal according to the host type based on the priority level of the host.

6. The information processing device according to claim 5, wherein the determination result includes a determination result of whether each of the hosts is a main host or a sub host as the host type based on the priority level.

7. The information processing device according to claim 1, wherein the control unit acquires identification information for identifying each of the hosts as the determination result, and controls a conversion process on the haptic signal according to the identification information.

8. The information processing device according to claim 7, wherein the identification information includes information indicating whether each of the hosts is a head mounted display (HMD) or a personal computer (PC).

9. The information processing device according to claim 7, wherein the identification information includes information indicating whether each of the hosts is an application that is executed on a PC to run an HMD or a PC.

10. The information processing device according to claim 6, wherein, in a case of determining that a user is using an application executed on a PC to run an HMD on a basis of a user's operation on a display of an HMD, the control unit identifies the HMD application as the main host and controls a conversion process on the haptic signal corresponding to the notification information generated in response to the user's operation.

11. The information processing device according to claim 6, wherein, in a case of determining that a user is using a 2D application executed on a PC on a basis of a user's operation on a display of the PC, the control unit identifies the PC as the main host and controls a conversion process on the haptic signal corresponding to the notification information generated in response to the user's operation.

12. The information processing device according to claim 2, wherein the conversion process includes a process of converting a frequency, amplitude, output period, or waveform included in the haptic signal.

13. The information processing device according to claim 2, wherein the control unit controls a conversion process on the haptic signals from the plurality of hosts to convert the haptic signals into haptic signals with non-overlapping frequency bands.

14. The information processing device according to claim 2, wherein the control unit controls a conversion process on the haptic signals from the plurality of processing entities to convert the haptic signals into haptic signals with non-overlapping amplitudes.

15. The information processing device according to claim 1, serving as a host further including a communication unit, wherein
the control unit controls
a process of outputting the notification as the host, and
a process of transmitting the notification from the communication unit to a haptic feedback device.

16. The information processing device according to claim 1, serving as a haptic feedback device further including a communication unit and at least one haptic feedback unit, wherein
the communication unit receives the notification from each of the hosts, and
the control unit inputs the notification to the at least one haptic feedback unit.

17. The information processing device according to claim 3, wherein the haptic signal is transmitted to the haptic feedback device via the second information processing device.

18. An information processing method comprising converting a haptic signal corresponding to notification information transmitted by each of a plurality of hosts into a different haptic signal on a basis of a determination result based on identification of host types of the plurality of hosts.

19. A program for causing a computer to function as:
a control unit that performs a process of converting a haptic signal corresponding to notification information transmitted by each of a plurality of hosts into a different haptic signal on a basis of a determination result based on identification of host types of the plurality of hosts.
